(19) **Europäisches Patentamt European Patent Office Office européen des brevets**

(11) **EP 4 392 901 B1**

(12) **EUROPEAN PATENT SPECIFICATION**

(45) Date of publication and mention of the grant of the patent:
**16.07.2025 Bulletin 2025/29**

(21) Application number: **23749179.0**

(22) Date of filing: **16.06.2023**

(51) International Patent Classification (IPC):
**G06N 3/0455** (2023.01) **G06N 3/0464** (2023.01)
**G06N 3/084** (2023.01) **G06N 3/096** (2023.01)

(52) Cooperative Patent Classification (CPC):
**G06N 3/0455; G06N 3/0464; G06N 3/084; G06N 3/096; G06V 10/776; G06V 10/82; G06V 20/41; G06V 20/49**

(86) International application number:
**PCT/JP2023/023441**

(87) International publication number:
**WO 2024/029229 (08.02.2024 Gazette 2024/06)**

(54) **LOW-LATENCY CAPTIONING SYSTEM**

UNTERTITELSYSTEM MIT NIEDRIGER LATENZ

SYSTÈME DE SOUS-TITRAGE À FAIBLE LATENCE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.08.2022 US 202217817373**

(43) Date of publication of application:
**03.07.2024 Bulletin 2024/27**

(73) Proprietor: **Mitsubishi Electric Corporation Tokyo 100-8310 (JP)**

(72) Inventors:
• **HORI, Chiori**
**Cambridge, Massachusetts 02139-1955 (US)**
• **LE ROUX, Jonathan**
**Cambridge, Massachusetts 02139-1955 (US)**
• **CHERIAN, Anoop**
**Cambridge, Massachusetts 02139-1955 (US)**
• **MARKS, Tim**
**Cambridge, Massachusetts 02139-1955 (US)**

(74) Representative: **Pfenning, Meinig & Partner mbB Patent- und Rechtsanwälte Theresienhöhe 11a 80339 München (DE)**

(56) References cited:
**US-A1- 2022 014 807**

• **PARAG ANKIT ET AL: "DSTC10-AVSD Submission System with Reasoning using Audio-Visual Transformers with Joint Student-Teacher Learning", 1 March 2022 (2022-03-01), XP093087992, Retrieved from the Internet <URL:https://github.com/shanemoon/dstc10/ blob/main/papers/dstc10_aaai22_track4_34.pdf> [retrieved on 20231002]**
• **MADAKE JYOTI ET AL: "Dense Video Captioning using BiLSTM Encoder", 2022 3RD INTERNATIONAL CONFERENCE FOR EMERGING TECHNOLOGY (INCET), IEEE, 27 May 2022 (2022-05-27), pages 1 - 6, XP034149463, DOI: 10.1109/INCET54531.2022.9824569**

**Description**

[Technical Field]

This invention relates generally to scene captioning and scene captioning based interaction more particularly to end-to-end scene captioning that utilizes a latency optimization function.

[Background Art]

Document Parag Ankit ET AL, "DSTC10-AVSD Submission System with Reasoning using Audio-Visual Transformers with Joint Student-Teacher Learning", 01 March 2022 (2022-03-01), URL: https://github.com/shane moon/dstc10/blob/main/papers/dstc10_aaai22_track4 _34.pdf, XP093087992 discloses an audio-visual scene-aware dialog system.

Document US 2022/014807 A1 discloses a method for generating captioning information of multimedia data.

Document MADAKE JYOTI ET AL, "Dense Video Captioning using BiLSTM Encoder", 2022 3RD INTERNATIONAL CONFERENCE FOR EMERGING TECHNOLOGY (INCET), IEEE,27 May 2022 (2022-05-27), page 1-6, XP034149463, DOI: 10.1 109/INCET5453 1.2022.9824569 discloses a method for dense video captioning.

At any time instant, countless events that happen in the real world are captured by sensors such as cameras, microphoens, LiDAR, mm Wave and stored as massive sensor data resources. To effectively retrieve such recordings, whether in offline or online settings, scene captioning is an essential technology thanks to its ability to understand scenes and describe events in natural language. Furthermore, robots can interact with humans or other robots to decide next actions based on scene understanding through online scene captioning.

Scene captioing technology has been actively researched in the field of computer vision for video captioning. A deep recurrent neural network (RNN) has been applied to video captioning, where an RNN is trained to convert a sequence of image features extracted from a video clip to a sequence of words that describes the video content. Its goal is to generate a video description (caption) about objects and events in any video clip. Recently, a Transformer model is getting more popular than RNNs as a model for video captioning, since it improves the captioning performance.

Moreover, not only image features but also audio features have been extracted from video clips and utilized to improve the caption quality, where an attention-based multimodal fusion technique has been introduced to effectively fuse the image and audio features according to the video content (US Patent 10,417,498).

Prior methods for video captioning are basically assumed to work in an offline manner, where each video clip is given before captioning, and therefore the system can access all frames of the video clip to generate the caption. However, such prior methods are not practical in real-time monitoring, surveillance systems, scene-understanding based interaction systems for car navigation and robots, in which it is essential not only to describe events accurately but also to produce captions as soon as possible to find and report the events quickly to take next actions. Thus, low-latency captioning for online systems is required to realize such functionality, where the system needs to decide an appropriate timing to generate a correct caption using only the limited number of frames the system has received so far. Additionally, such a low-latency captioning function allow robots to decide next actions as soon as possible to interact with humans and other robots.

[Summary of Invention]

Some embodiments of the present disclosure are based on recognition that scene captioning is an essential technology to understand scenes and describe events in natural language. To apply it to real-time monitoring systems, the systems require not only to describe events accurately but also to produce the captions as soon as possible. Low-latency captioning is needed to realize such functionality, but this research area for online scene captioning has not been pursued yet. This disclosure proposes a novel approach to optimize each caption's output timing based on a trade-off between latency and caption quality. An audio-visual Transformer is trained to generate ground-truth captions using only a small portion of all scenes, and to mimic outputs of a pre-trained Transformer to which all the scenes are given. A CNN-based timing detector is also trained to detect a proper output timing, where the captions generated by the two Transformers become sufficiently close to each other. With the jointly trained Transformer and timing detector, a caption can be generated in the early stages of an event, as soon as an event happens or when it can be forecasted.

An object of some embodiments of the invention is to provide a system and a method for end-to-end scene captioning capable for online/offline surveillance system and scene-aware interaction to understand the events using natural language as soon the system recognizes the events as possible.

The above problems are solved by the subject-matter according to the independent claims. This disclosure includes a low-latency scene captioning system, which is trained to optimize the output timing for each caption based on a trade-off between latency and caption quality. The present invention may train a low-latency caption generator according to the following strategy: (1) generate groundtruth captions using a low-latency caption generator that only sees a small portion of all scenes acquired by sensors or a small portion of all signals; (2) mimic outputs of a pre-trained caption generator, where the outputs are generated using the entire scene; and (3) train a timing detector that finds the best timing to output a caption, such that the caption ultimately generated by the low-latency caption generator becomes sufficiently close to its groundtruth caption or the caption generated by the pre-trained caption generator using the entire scene. The low-latency caption generator based on (1) and (2) and the timing detector of (3) are jointly trained.

The jointly trained low-latency caption generator and timing detector can generate captions in an early stage of scene acquired by sensors, as soon as an event happens. Additionally, this framework can be applied to forecast future events in low-latency captioning. Furthermore, by combining multimodal sensing information, an event can be recognized at an earlier timing triggered by the earliest cue in one of modalities without waiting for other cues in other modalities. In particular, an audio-visual Transformer built as a low-latency caption generator according to embodiments of the present invention can be used to generate captions earlier than a visual cue's timing based on the timing of an audio cue. Such a low-latency video captioning system using multimodal sensing information can contribute not only to retrieving events quickly but also to respond scenes earlier.

Some embodiments are based on recognition that experiments with the ActivityNet Captions dataset show that a system based on the present invention achieves 94% of the caption quality of the upper bound given by the pre-trained Transformer using the entire video clips, using only 28% of frames from the beginning.

According to an example, a scene captioning system can be provided. In this case, the scene captioning system may include an interface configured to acquire a stream of signals captured by multimodal sensors to caption scenes; a memory to store a computer-executable scene captioning model including a multimodal sensor feature extractor, a multimodal sensor feature encoder, a timing detector, and a scene caption decoder, wherein the multimodal sensor feature encoder is shared by the timing detector and the scene caption decoder; a processor, in connection with the memory, configured to perform steps of: extracting multimodal sensor features from the multimodal sensor signals by use of the multimodal sensor feature extractor; encoding multimodal sensor features by use of the multimodal sensor feature encoder; determining a timing of generating a scene caption by use of the timing detector, wherein the timing is arranged an early stage of the stream of multimodal sensor signals; and generating the scene caption describing events based on the multimodal sensor features by using the scene caption decoder according to the timing.

Further, some examples are based on recognition that a computer-executable training method is provided for training a multimodal sensor feature encoder, a timing detector, and a scene caption decoder. The method may include providing a trainig dataset that includes a set of multimodal sensor signals and a set of groundtruth scene captions; converting the multimodal sensor signals to a feature vector sequence using a feature extractor; eliminating future frames from the feature vector sequence using a future frame eliminator, wherein the future frame eliminator takes first feature vectors from the feature vector sequence and removes other feature vectors to generates a future-eliminated feature vector sequence; encoding the future-eliminated feature vector sequence to a hidden activation vector sequence; training the low-latency scene caption generator by computing a loss value; computing a loss value based on a posterior probability distribution and the groundtruth captions; training the timing detector by computing a supervision signal based on a scene caption similarity between a scene caption for the future-eliminated feature vector sequence and the groundtruth caption.

Yet further, when the scene captioning system is configured as a video captioning system, the video captioning system may include an interface configured to acquire a stream of audio-visual signals including image and sound data; a memory to store a computer-executable video captioning model including an audio-visual feature extractor, an audio-visual feature encoder, a timing detector, and a video caption decoder, wherein the audio-visual encoder is shared by the timing decoder and the timing detector and the video caption decoder; a processor, in connection with the memory, configured to perform steps of:extracting audio and visual features from the audio-visual signals by use of the audio-visual extractor; encoding audio and visual features from the audio-visual signals by use of the audio-visual encoder; determining a timing of generating a video caption by use of the timing detector, wherein the timing is arranged an early stage of the stream audio-visual signals; and generating the video caption describing audio-visual scenes based on the audio and visual features by using the video caption decoder according to the timing.

According to some embodiments of the present invention, an artificial intelligence (AI) low-latency processing system is provided. The low-latency processing system includes a processor and a memory having instructions stored thereon that, when executed by the processor, cause the low-latency processing system to collect a sequence of frames of a video stream, the sequence of frames jointly including information dispersed among at least some frames in the sequence of frames; execute a timing neural network trained to identify an early subsequence of frames in the sequence of frames including at least a portion of the information indicative of the information; execute a decoding neural network trained to decode the information from the portion of the information in the subsequence of frames, wherein the timing neural network is jointly trained with the decoding neural network to iteratively identify the smallest number of subframes from the beginning of a training sequence of frames containing a portion of training information sufficient to decode the training information. Further, the information is a caption for an audio scene, a video scene, or an audio-video scene. Moreover, the processor is configured to

execute a feature extractor neural network to extract features from each frame in the sequence of frames, wherein the feature extractor neural network is configured to extract the features from an audio signal $X^A$ and a visual signal $X^V$ from audio and visual tracks of the video stream;

execute a feature encoder neural network to encode the extracted features of each frame to produce a sequence of encoded features;

submit the sequence of encoded features to the timing detector neural network and to identify a subsequence of encoded features representing the subsequence of frames; and

submit the subsequence of encoded features to the decoder neural network to decode the information;

wherein encoded representations for audio and visual features are obtained as $A^N$ and $V^N$;

wherein the timing neural network is configured to process an encoded vector sequence from each modality with stacked 1D-convolution layers as

$$A_c = \mathrm{Conv1D}(A^N), V_c = \mathrm{Conv1D}(V^N);$$

wherein the timing neural network is configured to summarize each time-convoluted sequence into a single vector through pooling and concatenation operations:

$$H = \mathrm{Concat}(\mathrm{MeanPool}(A_c), \mathrm{MeanPool}(V_c));$$

wherein the timing neural network comprises a feed-forward layer FFN()and sigmoid function $\sigma()$ configured to convert the summary vector to a probability of $\mathcal{D}$, where $\mathcal{D} \in \{0, 1\}$ is a random variable indicating whether a relevant caption can be generated or not:

$$P(\mathcal{D} = 1 | X^A, X^V) = \sigma(\mathrm{FFN}(H))$$

$$P(\mathcal{D} = 0 | X^A, X^V) = 1 - P(\mathcal{D} = 1 | X^A, X^V);$$

wherein the decoding neural network is configured to generate the caption based on the encoded representations for audio and visual features $A^N$, $V^N$ once the timing neural network provides a higher probability than a threshold.

Further, an embodiment of the present invention provides a computer-implemented method for an artificial intelligence (AI) low-latency processing system including a processor and a memory storing instructions of the computer-implemented method performing steps using the processor. The computer-implemented method includes the steps of collecting a sequence of frames of a video stream, the sequence of frames jointly including information dispersed among at least some frames in the sequence of frames; a timing neural network trained to identify an early subsequence of frames in the sequence of frames including at least a portion of the information indicative of the information; executing a decoding neural network trained to decode the information from the portion of the information in the subsequence of frames, wherein the timing neural network is jointly trained with the decoding neural network to iteratively identify the smallest number of subframes from the beginning of a training sequence of frames containing a portion of training information sufficient to decode the training information. Further, the information is a caption for an audio scene, a video scene, or an audio-video scene.

Moreover, the processor is configured to

execute a feature extractor neural network to extract features from each frame in the sequence of frames, wherein the feature extractor neural network extracts the features from an audio signal $X^A$ and a visual signal $X^V$ from audio and visual tracks of the video stream;

execute a feature encoder neural network to encode the extracted features of each frame to produce a sequence of encoded features;

submit the sequence of encoded features to the timing detector neural network and to identify a subsequence of encoded features representing the subsequence of frames; and

submit the subsequence of encoded features to the decoder neural network to decode the information;

wherein encoded representations for audio and visual features are obtained as $A^N$ and $V^N$;

wherein the timing neural network processes an encoded vector sequence from each modality with stacked 1D-convolution layers as

$$A_c = \text{Conv1D}(A^N), V_c = \text{Conv1D}(V^N);$$

wherein the timing neural network summarizes each time-convoluted sequence into a single vector through pooling and concatenation operations:

$$H = \text{Concat}(\text{MeanPool}(A_c), \text{MeanPool}(V_c));$$

wherein the timing neural network comprises a feed-forward layer FFN() (417) and sigmoid function $\sigma()$ that convert the summary vector to a probability of $\mathcal{D}$, where $\mathcal{D} \in \{0, 1\}$ is a random variable indicating whether a relevant caption can be generated or not:

$$P(\mathcal{D} = 1|X^A, X^V) = \sigma(\text{FFN}(H))$$

$$P(\mathcal{D} = 0|X^A, X^V) = 1 - P(\mathcal{D} = 1|X^A, X^V);$$

wherein the decoding neural network generates the caption based on the encoded representations for audio and visual features $A^N$, $V^N$ once the timing neural network provides a higher probability than a threshold.

The presently disclosed embodiments will be further explained with reference to the attached drawings. The drawings shown are not necessarily to scale, with emphasis instead generally being placed upon illustrating the principles of the presently disclosed embodiments.

[Brief Description of Drawings]

[FIG. 1]

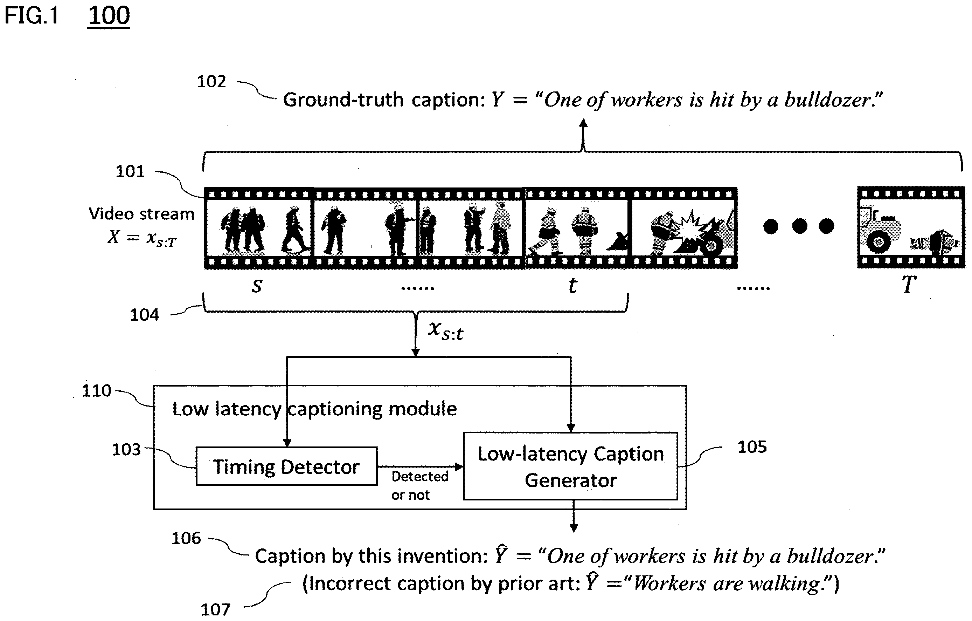

FIG. 1 is a schematic diagram illustrating a process of low-latency video captioning, according to embodiments of the present invention.
[FIG. 2]

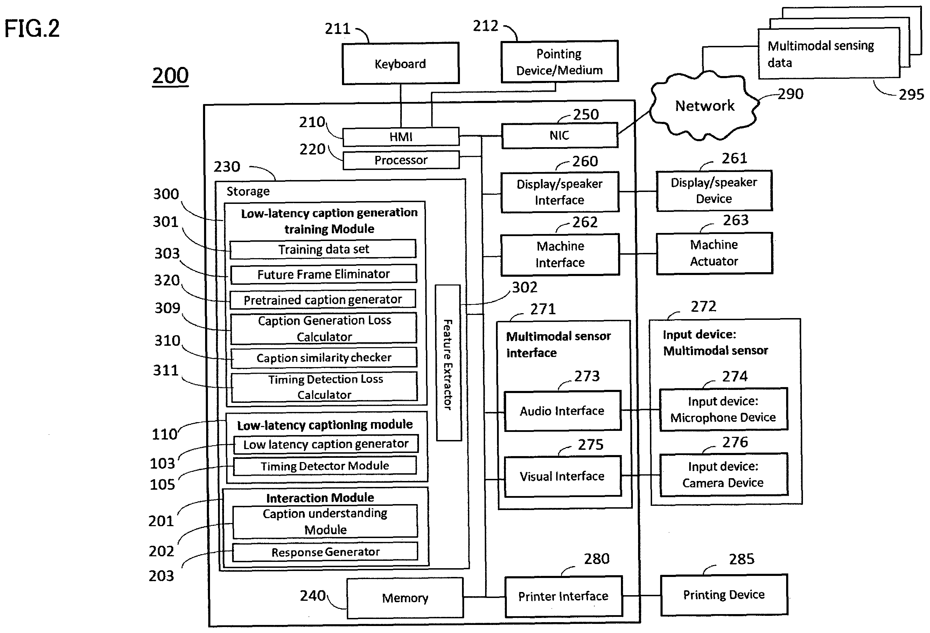

FIG. 2 is a block diagram illustrating a low-latency video captioning system including a low-latency caption generator, a pre-trained caption generator, and a timing detector, according to embodiments of the present invention.
[FIG. 3]

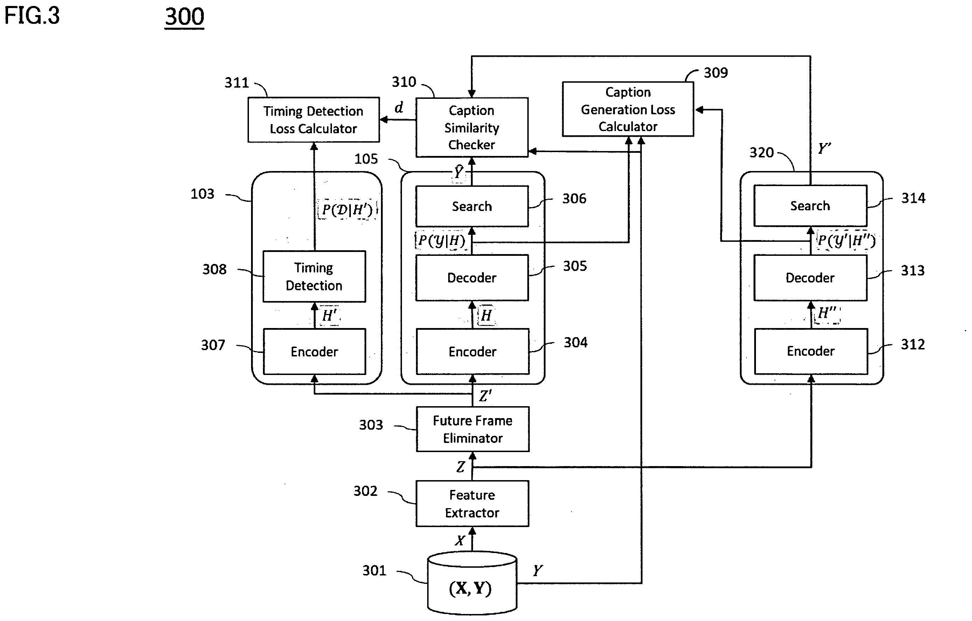

FIG. 3 is a block diagram illustrating a training procedure for a low-latency caption generator and a timing detector, which exploits a pre-trained caption generator to jointly optimize the low-latency caption generator and the timing detector, according to embodiments of the present invention.
[FIG. 4]

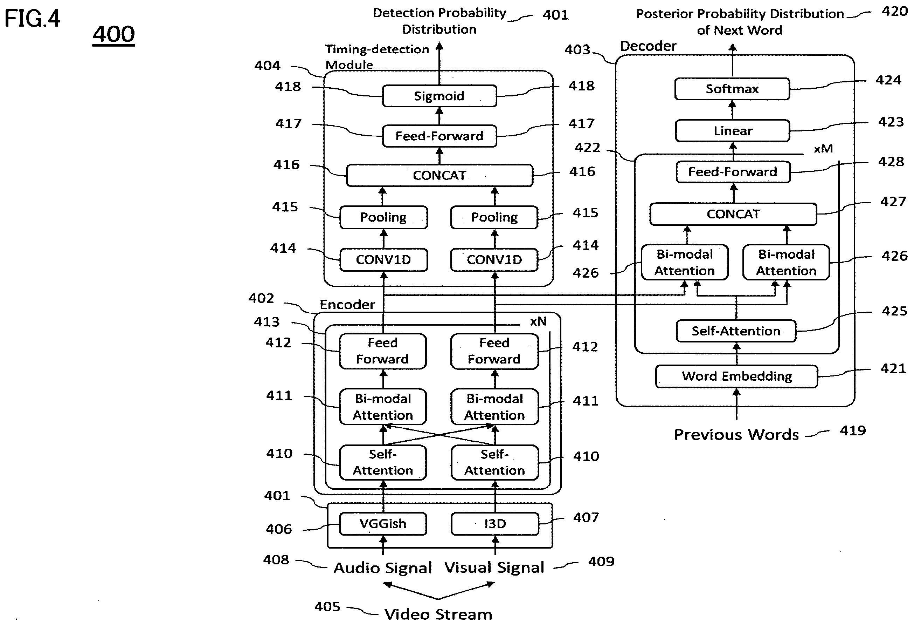

FIG. 4 is a schematic diagram illustrating an audio-visual Transformer built as a low-latency caption generator combined with a timing detector for low-latency video captiong, according to embodiments of the present invention.
[FIG. 5]

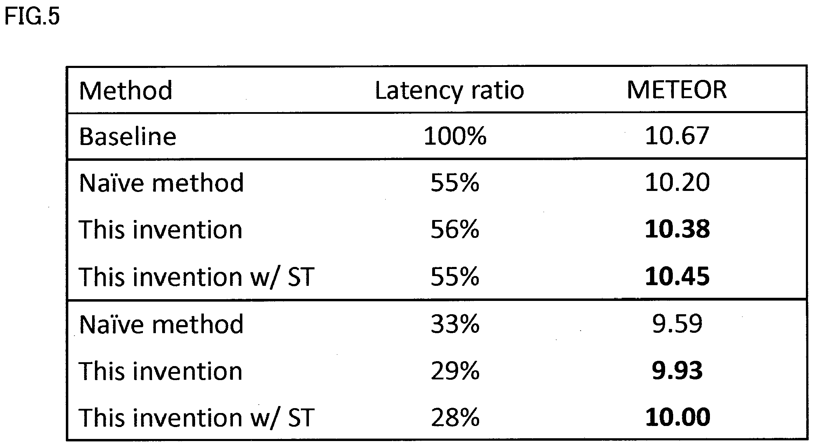

FIG. 5 is an evaluation result obtained by performing a low-latency video captioning test using an audio-visual Transformer built as a low-latency caption generator combined with a timing detector, according to embodiments of the present invention.
[FIG. 6]

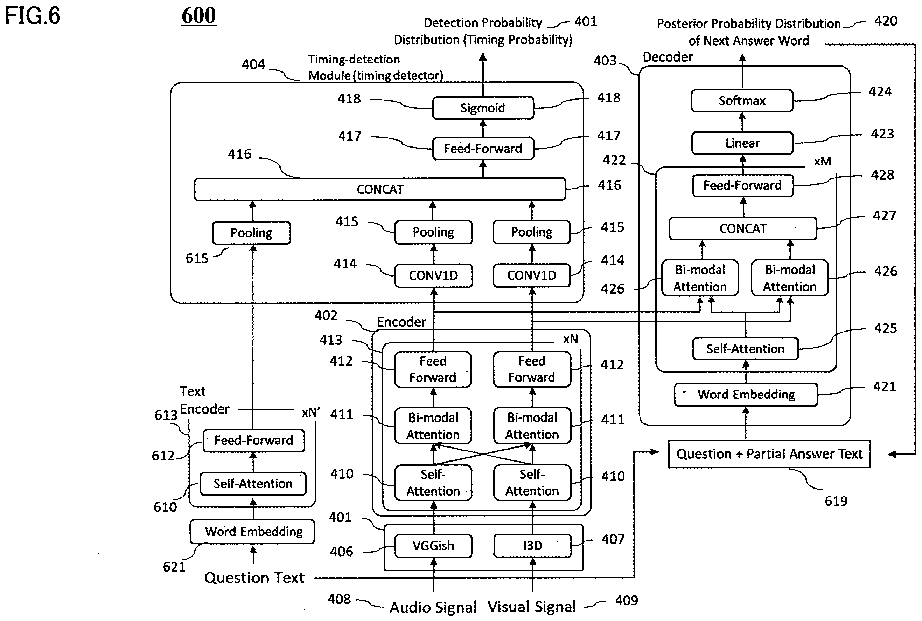

FIG. 6 illustrates the model architecture, which consists of a question encoder, an AV encoder, a timing detector, and a response decoder, according to embodiments of the present invention.
[FIG. 7]

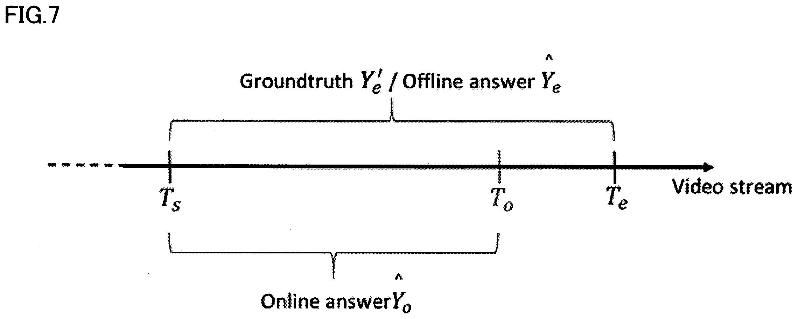

FIG. 7 illustrates a video stream, where the video has started at time $T_s$ and ends at $T_e$, which are associated with ground-truth answer $Y_e{}'$, according to embodiments of the present invention.
[FIG. 8]

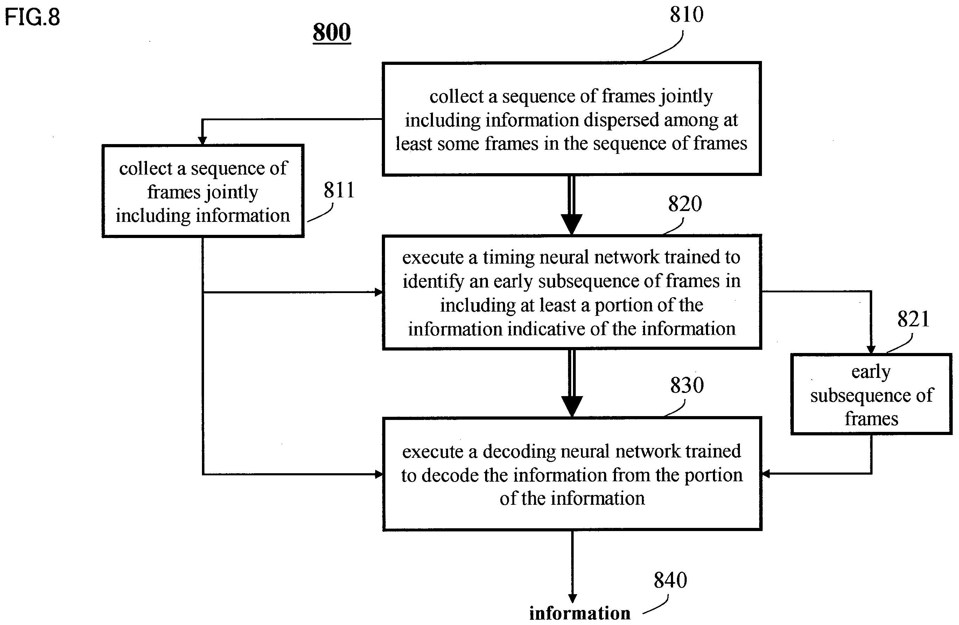

FIG. 8 shows process steps performed by the low-latency processing system using a processor and a memory or memory storages storing instructions, according to an embodiment of the pressent invention.
[FIG. 9]

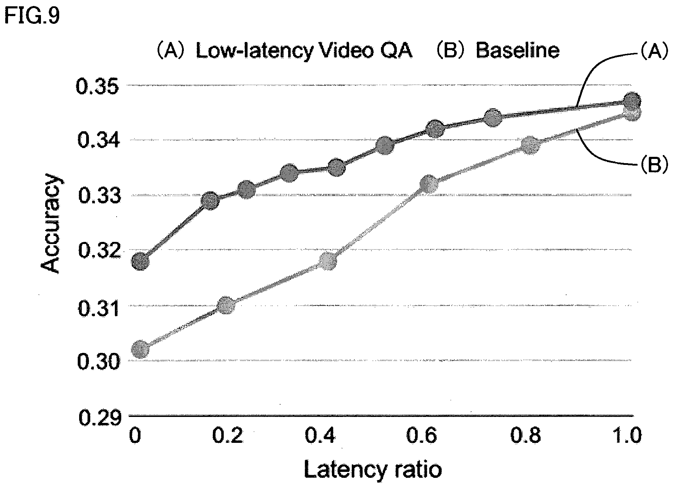

FIG. 9 shows the relationship between latency ratio and answer accuracy on MSRVTT-QA, according to embodiments of the present invention.
[FIG. 10]

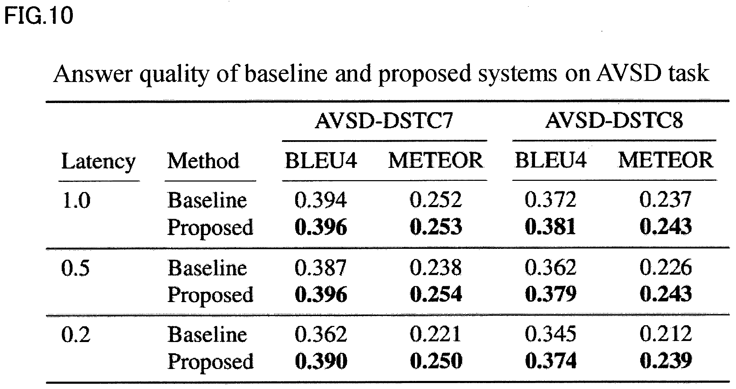

FIG. 10 shows a comparison of the quality of answer sentences on the AVSD task, according to embodiments of the present invention.
[FIG. 11A]

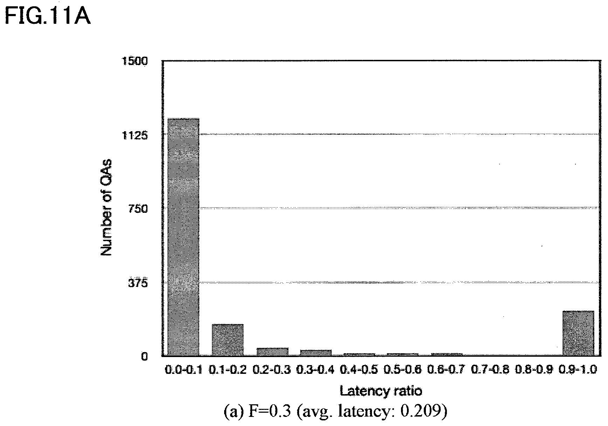

FIG. 11A shows the distribution of the QAs over the latency with a detection threshold F = 0.3 on the AVSD-DSTC7 task, according to embodiments of the present invention.
[FIG. 11B]

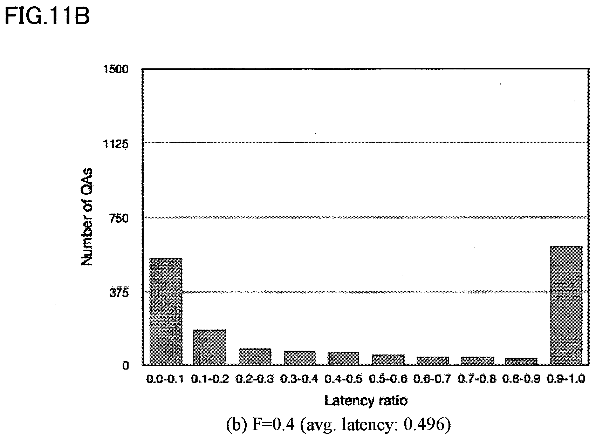

FIG. 11B shows the distribution of the QAs over the latency with a detection threshold F = 0.4 on the AVSD-DSTC7 task, according to embodiments of the present invention.

[Description of Embodiments]

While the above-identified drawings set forth presently disclosed embodiments, other embodiments are also contemplated, as noted in the discussion. This disclosure presents illustrative embodiments by way of representation and not limitation.

The following description provides exemplary embodiments only, and is not intended to limit the scope, applicability, or configuration of the disclosure. Rather, the following description of the exemplary embodiments will provide those skilled in the art with an enabling description for implementing one or more exemplary embodiments.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.

Also, individual embodiments may be described as a process, which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed, but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, using machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks.

Modules and networks exemplified in the present disclosure may be computer programs, software or instruction codes, which can execute instructions using one or more processors. Modules and networks may be stored in one or more storage devices or otherwise stored into computer readable media such as storage media, computer storage media, or data storage devices (removable and/or non-removable) such as, for example, magnetic disks, optical disks, or tape, in which the computer readable media are accessible from the one or more processors to execute the instructions.

Computer storage media may include volatile and non-volatile, removable and non-removable media implemented in any method or technology for storage of information, such as computer readable instructions, data structures, program modules, or other data. Computer storage media may be RAM, ROM, EEPROM or flash memory, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both using one or more processors. Any such computer storage media may be part of the device or accessible or connectable thereto. Any application or module herein described may be implemented using computer readable/executable instructions that may be stored or otherwise held by such computer readable media.

(Low-Latency Captioning)

According to some embodiments of the present disclosure, a scene captioning system can provide low-latency scene captioning to understand scenes and describe events in natural language from real-time monitoring of scenes or online/offline scene streaming.

In some cases, the scene captioning system can be configured as a video captioning system, and the video captioning system may be referred to as a low-latency video captioning method/system.

In the following, a low-latency video captioning method/system is provided as an example descriptons of the low-latency scene captioning method/system.

For instance, a stream of signals obtained by unimodal or multimodal sensors can be translated into captions using natural language. Unimodal is included by multimodal when a single sensor is applied. The multimodal sensors capture information such as visual image, audio signals, 3D-localization, thermography, Wi-Fi and so on. In some cases, the sensors may be image sensors, microphone, audio-visual signal sensors, LiDAR, mm Wave, thermo-sensor, smell-sensor, tactile-sensor or any combinations thereof.

When the low-latency scene captioning method/system is applied to realtime or offline video streams, multimodal sensor signals may be a stream of audio-video signal, a scene encoder may be an audio-visual encoder, unimodal/-multimoda sensor features may be audio and visual features. Further, multimodal sensor signals may be signals/information acquired by multimodal sensors. For instance, the signals can be any of sensing information such as video frames, sound data, 3-D localization data, thermo sensor data, smell sensor data, tactile sensor data or any combinations thereof.

FIG. 1 is a schematic diagram illustrating a process of low-latency video captioning, according to embodiments of the present invention. Suppose a video stream 101 is given as $X$, in which an event has occurred between time s and time $T$, where a groundtruth caption 102 as $Y$ may be *"One of workers is hit by a bulldozer"* for the event. The caption is typically a sentence that explains the event in natural language. Video captioning systems based on prior art generate such a caption for a video clip using the entire frames $x_{s:T}$ of the video stream $X$, where $x_{s:T}$ denotes a sequence of video frames $x_s$, $x_{s+1}$, ... , $x_{T-1}$, $x_T$, each of which corresponds to a video frame for each time index. Therefore, such prior video captioning systems are assumed to work only in an offline manner.

However, such prior methods are not practical in real-time monitoring or surveillance systems, in which it is essential not only to describe events accurately but also to produce captions as soon as possible. To this end, a low-latency video captioning module 110 needs to have a timing detector 103 that decides if the current time t is an appropriate timing to output a caption, using partial video frames 104, i.e., $x_{s:T}$ the video frames from the beginning time s to the current time t. Only if the timing detector 103 detects the appropriate timing, a low-latency caption generator 105 generates a caption 106 based on the partial video frames 104. The beginning time s may be decided based on a timing the system generated the previous caption or a timing a certain change on pixel intensities in the video is detected (not shown in FIG. 1).

One remaining problem is that there is no sufficient dataset to train the timing detector 103 and the low-latency caption generator 105, where the dataset should be annotated with appropriately early timings and their captions for various videos. There exist datasets only for offline video captioning, i.e., the datasets were annotated with timings where the events have already finished in the video. In general, correcting a large amount of new dataset with such early timing annotations is very expensive.

To solve this problem, embodiments of the present invention train the timing detector 103 and the low-latency caption generator 105 using only datasets for offline video captioning, where the detector and the generator are optimized not only to describe events accurately but also to produce captions as soon as possible. Thus, low-latency video captioning is realized by detecting an appropriate timing to generate a correct caption using only the partial video frames 104 until the current time t. The system may generate a caption 106, which is equal to the groundtruth 102 *"One of workers is hit by a bulldozer"* even though it uses only partial video frames 104. On the other hand, prior methods that train the generator for offline video captioning may generate an incorrect caption 107 as *"Workers are walking"* for the partial video frames 104, because the generator is trained to generate a caption about an event occurred in each video clip. In the example of low-latency video captioning 100, the event *"One of workers is hit by a bulldozer"* has not yet occurred at time t. Therefore, it is difficult for systems based on prior art to generate the correct caption, while systems based on the present invention potentially generate the correct caption since the generator is trained to utilize some signs on future events in the partial video frames to generate correct captions.

(Low-latency captioning based interaction system)

FIG. 2 is a block diagram illustrating a low-latency video captioning system 200 including a low-latency caption generation training module 300 consisting of a traing data set 301, a feature extractor 302, a future frame eliminator 303, a pre-trained caption generator 320, a caption generation loss calculator 309, a caption similarity checker 310 and a timng detection loss calculator 311, a low-latency captioning module 110 consisting of a timing detector module 103 and a low latency caption generator 105, interaction module 201 consisting of a caption understnading module 202 and a response generator 203 and, according to embodiments of the present invention.

The low-latency video captioning system 200 includes a human machine interface (HMI) 210 connectable with a keyboard 211 and a pointing device/medium 212, one or more processor 220, a memory 240, a network interface controller 250 (NIC) connectable with a network 290 including local area networks and internet network, a display and/or speaker interface 260 connectable with a display and/or speaker device 261, a machine interface 262 connectable with a machine actuator 263, an multimodal sensor interface 271 such as an audio interface 273 and a visual interface 275 connectable with input devices including multimodal sensors 272 such as a microphone device 274 and a camera device 276 respectively, a printer interface 280 connectable with a printing device 285. The memory 240 may be one or more memory units. The low-latency video captioning-based interaction system 200 can receive multimodal sensing data 295 via the network 290 connected to the NIC 250. The storage device 230 includes a feature extractor 302, a low-latency caption generation training module 300, a low latency captioning module 110 and an interaction module 201. In some cases, the feature extractor 302 may be configured as a multimodal sensor feature extractor 302 when the system is configured as a scene captioning system. Further the feature extractor 302 may be configured as an audio-visual feature extractor 302 when the system is configured as a video captioning system.

For performing the low-latency captioning, instructions may be transmitted to the low-latency video captioning system 200 using the keyboard 211, the pointing device/medium 212 or via the network 290 connected to other computers (not shown in the figure). The system 200 receives instructions via the HMI 210 and executes the instructions for performing low-latency video captioning using the processor 220 in connection with the memory 240 by loading the low-latency captioning module 110.

The low-latency video captioning module 110 outputs a token sequence as captioning result for a given multimodal sensing feature sequence obtained by feature extractor 302, and sends the token sequence to the display/speaker device 265 via the display/speaker interface 260, the printer device 285 via the printer interface 280, or other computers (not shown in the figure) via the network 290. Each token in the token sequence may be a single word, a single letter, a single character, or a word piece in a text form.

(Training procedure for low-latency video captioning system)

FIG. 3 is a block diagram illustrating a training module 300 included in a low-latency video captioning system 200 including a low latency captioing module 110, which exploits a pre-trained caption generator 320 to jointly optimize the low-latency caption generator 103 and the timing detector 105, according to embodiments of the present invention.

Given a training dataset 301 including a set of video clips X and a set of groundtruth captions Y, wherein each video clip X in X is associated with its groundtruth caption Y in Y, first a feature extractor 302 converts the video clip X to a feature vector sequence Z for the video clip X. Then, a future frame eliminator 303 eliminates future frames from Z to simulate a situation of low-latency video captioning, where the future frames are not available. The future frame eliminator 303 takes the first K feature vectors of Z, removes the rest, and generates a future-eliminated feature vector sequence Z', where K may be determined randomly from $1 \leq K \leq |Z|$ ($|Z|$ denotes the length of Z).

The low-latency caption generator 105 may include an encoder 304, a decoder 305, and a search module 306, wherein the encoder 304 encodes the future-eliminated feature vector sequence Z' to a hidden activation vector sequence H, the decoder 305 estimates a posterior probability distribution $P(Y|H)$ over a random variable Y of captions for H, and the search module 306 searches for the best caption $\hat{Y}$ such that

$$\hat{Y} = \operatorname*{argmax}_{y \in \mathcal{V}^*} P(\mathcal{Y} = \mathbf{y}|H) \,,$$

where V* indicates a set of all possible word sequences based on a predefined vocabulary V.

The timing detector 103 may include an encoder 307 and a timing detection module 308, wherein the encoder 307 encodes the future-eliminated feature vector sequence Z' to a hidden activation vector sequence H'. The timing detector 103 may use the encoder 304 of the low-latency caption generator 105 instead of the encoder 307. In this case, the timing detector 103 may not have the encoder 307, and may receive the output of the encoder 304, i.e., H' may be obtained as H' = H.

The timing detection module 308 estimates a detection probability distribution $P(\mathcal{D}|H')$ over a random variable $\mathcal{D}$ indicating whether the current timing is appropriate or not based on H'. The random variable $\mathcal{D}$ takes 0 or 1, where 0 indicates that the current timing is inappropriate while 1 indicates that the current timing is appropriate. In low-latency video captioning 100, the timing detector 103 detects the appropriate timing when $P(D = 1|H') > F$, where F is a pre-determined threshold such that $0 \leq F < 1$.

To train the low-latency caption generator 105, a caption generation loss calculator 309 may compute a loss value based on the posterior probability distribution $P(Y|H)$ and the groundtruth caption Y. The loss value may be computed as a cross-entropy loss;

$$\mathcal{L}_{CE} = -\log P(\mathcal{Y} = Y|H) \, .$$

If the encoder 304 and the decoder 305 are designed as differentiable functions such as neural networks, the parameters of the neural networks can be trained to minimize the cross-entropy loss using the back-propagation algorithm. Minimizing the cross-entropy loss means letting the low-latency caption generator 105 generate appropriate captions as close as possible to the groundtruth captions. Further, when the system is configured as a scene captioning system, the encoder 304 may be configured as a multimodal sensor feature encoder 304. When the system is configured as video captioning system, the encoder 304 may be configured as an audio-visual feature encoder 304.

To train the timing detector 103, it needs a supervision signal on whether the current timing is appropriate or not. However, such kinds of signals are not included in the training dataset 301. Some embodiments of the present invention may have a caption similarity checker 310 to determine the appropriate timing based on the caption similarity between the generated caption $Y$ and the groundtruth caption Y. This is based on an idea that the appropriate timing is a timing when the low-latency caption generator can generate a caption $\hat{Y}$ for the future-eliminated feature vector sequence Z', which is sufficiently close to the groundtruth caption Y. The caption similarity may be computed based on any sequence similarity measures such as Word accuracy, BLEU score, and METEOR score defined between the word sequences of the two captions.

The supervision signal *d* may be computed as

$$d = \begin{cases} 1 & \text{if } \mathrm{Sim}(\hat{Y}, Y) > S, \\ 0 & \text{otherwise,} \end{cases}$$

where Simer($\hat{Y}$, *Y*) is a similarity measure between $\hat{Y}$ and *Y,* and S is a predefined threshold such that $0 \le S < 1$.

Based on the supervison d and the detection probability distribution $P(\mathcal{D}|H')$ estimated by the timing detection module 308, a binary cross-entropy loss can be computed as

$$\mathcal{L}_{BCE} = -\log P(\mathcal{D} = d|H').$$

As well as the low-latency caption generator 105, the timing detector 103 can be trained using the back-propagation algorithm if the encoder 307 and the timing detection module 308 are designed as differentiable functions such as neural networks.

In some embodiments of the present invention, the training procedure 300 for a low-latency video captioning system 200 may also include a pre-trained caption generator 203 to improve the performance of the low-latency video captioning system 200. The pre-trained caption generator 203 may include an encoder 312, a decoder 313, and a search module 314, which have already been trained using the training dataset 301 to minimize the loss function

$$\mathcal{L}'_{CE} = -\log P(\mathcal{Y} = Y|H'')$$

where H" may be generated by the encoder 312 from the feature vector sequence Z, which are not eliminated. The generated caption $Y'$ obtained as

$$Y' = \underset{\mathrm{y} \in \mathcal{V}^*}{\mathrm{argmax}} \, P(\mathcal{Y} = \mathrm{y}|H'')$$

is expected to be closer to the groundtruth caption Y than the low-latency caption $\hat{Y}$ because the pre-trained caption generator 203 can use sufficient video frames (without future frame elimination) to generate captions unlike the low-latency caption generator 105.

Similary, the estimated posterior probability distribution $P(\hat{Y}|H'')$ is expected to be better than $P(Y|H)$ to generate correct captions.

With the pre-trained caption generator 203, the caption generation loss calculator 310 may use a Kullback-Leibler (KL) divergence loss as

$$\mathcal{L}_{KL} = - \sum_{\mathrm{y} \in \mathcal{V}^*} P(\mathcal{Y} = \mathrm{y}|H'') \log P(\mathcal{Y} = \mathrm{y}|H)$$

where the loss value $\mathcal{L}_{KL}$ is computed as a KL divergence that indicates the similarity between two probability distributions. Minimizing the KL divergence means training the low-latency caption generator 105 to mimic the pre-trained caption generator 203, where the low-latency caption generator 105 can use only the future-eliminated feature vector sequence $Z'$ while the pre-trained caption generator 203 can use the entire feature vector sequence $Z$. More specifically, the training is performed to let the low-latency caption generator 105 estimate the posterior probability distribution $P(Y|H)$ as close as possible to the posterior probability distribution $P(Y|H'')$ estimated by the pre-trained caption generator 203 using the entire video frames. This framework potentially avoids overfitting the parameters of the low-latency caption generator 105 to the groundtruth caption $Y$.

A linear combination of the cross-entropy loss $\mathcal{L}_{CE}$ and the KL divergence loss $\mathcal{L}_{KL}$ may also be used to train the low-latency caption generator 105 as

$$\mathcal{L}_{\mathrm{conv}} = \lambda \mathcal{L}_{CE} + (1 - \lambda)\mathcal{L}_{KL}$$

where $\lambda$ is a pre-defined scaling factor to balance the two losses.

With the pre-trained caption generator 203, the caption similarity checker 310 may compute the supervision signal $d$ as

$$d = \begin{cases} 1 & \text{if } \max(\mathrm{Sim}(\hat{Y}, Y), \mathrm{Sim}(Y', Y)) > S, \\ 0 & \text{otherwise}, \end{cases}$$

This mechanism encourages the timing detector 103 to detect the timing when the low-latency caption generator 105 can generate a caption not only close to the groundtruth caption $Y$ but also to the caption $Y'$ generated by the pre-trained caption generator 203 for the entire feature vector sequence $Z$. This also avoids the supervison for the timing detector 103 relys only on the similarity to the groundtruch caption $Y$, which hopefully improves the robustness of the timing detector 103.

(Some embodiments based on Audio-visual Transformer)

FIG. 4 is a schematic diagram illustrating an audio-visual Transformer 400 built as a low-latency caption generator combined with a timing detector for low-latency video captioning, according to embodiments of the present invention. The audio-visual Transformer 400 for low-latency video captioning includes a feature extractor 401, an encoder 402, a decoder 403, and a timing detection module 404.

Given a video stream 405, the feature extractor 401 extracts VGGish features 406 and I3D features 407 from the audio signal 408 and the visual signal 409 from the audio and visual tracks of the video stream 405, respectively, where the audio signal 408 may be an audio waveform and the visual signal 409 may be a sequence of images. The frame rate for feature extraction may be different on each track. The encoder 402 encodes the VGGish 406 and I3D 407 feature vectors, where the sequences of audio and visual features from a starting point to the current time are fed to the encoder 402 and converted to hidden activation vector sequences through self-attention layers 410, bi-modal attention layers 411, and feed-forward layers 412. Typically, this encoder block 413 is repeated $N$ times, e.g., $N = 6$ or greater. The final hidden activation vector sequences are obtained via the $N$-th encoder block.

Let $X^A$ and $X^V$ be audio signal 408 and visual signal 409. First, the feature extractor 401 is applied to the input signals as

$$A^0 = \mathrm{VGGish}(X^A), \quad V^0 = \mathrm{I3D}(X^V),$$

to obtain feature vector sequences corresponding to the VGGish 406 and I3D 407 features, respectively. Each encoder block 413 computes hidden vector sequences as

$$\overline{A}^n = A^{n-1} + \mathrm{MHA}(A^{n-1}, A^{n-1}, A^{n-1}),$$

$$\overline{V}^n = V^{n-1} + \mathrm{MHA}(V^{n-1}, V^{n-1}, V^{n-1}),$$

$$\tilde{A}^n = \overline{A}^n + \mathrm{MHA}(\overline{A}^n, \overline{V}^n, \overline{V}^n),$$

$$\tilde{V}^n = \overline{V}^n + \mathrm{MHA}(\overline{V}^n, \overline{A}^n, \overline{A}^n),$$

$$A^n = \tilde{A}^n + \mathrm{FFN}(\tilde{A}^n),$$

$$V^n = \tilde{V}^n + \mathrm{FFN}(\tilde{V}^n),$$

where MHA() and FFN() denote a multi-head attention and a feed-forward network, respectively.

MHA() takes three matrices query $Q$, key $K$, and value $V$, each of which has the length times feature dimensions as $Q \in \mathbb{R}^{T_q \times d_k}$, $K \in \mathbb{R}^{T_k \times d_k}$, $V \in \mathbb{R}^{T_v \times d_v}$, and returns a matrix as

$$\mathrm{MHA}(Q, K, V) = \mathrm{Concat}(\mathrm{head}_1, \dots, \mathrm{head}_h)W^O$$

$$\mathrm{head}_i = \mathrm{Attention}(QW_i^Q, KW_i^K, VW_i^V)$$

$$\mathrm{Attention}(Q, K, V) = \mathrm{softmax}\left(\frac{QK^T}{\sqrt{d_k}}\right)V$$

where $W_i^Q \in \mathbb{R}^{d_{\mathrm{model}} \times d_k}, W_i^K \in \mathbb{R}^{d_{\mathrm{model}} \times d_k}, W_i^V \in \mathbb{R}^{d_{\mathrm{model}} \times d_v}$ and $W^O \in \mathbb{R}^{hd_v \times d_{\mathrm{model}}}$ are parameter matrices of each multi-head attention layer, $h$ is the number of heads, and $d_{\mathrm{model}}$ is the model size. Concat() concatenates matrices in the feature dimension.

The feed-forward network FFN() is computed as

$$\mathrm{FFN}(x) = \max(0, xW_1 + b_1)W_2 + b_2,$$

where $W_1 \in \mathbb{R}^{d_k \times d_{\mathrm{ff}}}$ and $W_2 \in \mathbb{R}^{d_{\mathrm{ff}} \times d_k}$ are parameter matrices and $b_1 \in \mathbb{R}^{d_{\mathrm{ff}}}$ and $b_2 \in \mathbb{R}^{d_k}$ are parameter vectors of each feed-forward layer.

The self-attention layer 410 extracts temporal dependency within each modality, where the arguments for MHA() are all same, i.e., $A^{n-1}$ or $V^{n-1}$. The bi-modal attention layers 411 further extract cross-modal dependency between audio and visual features, where they take the key and the value from the other modality. After that, the feed-forward layers 412 are applied in a point-wise manner. The encoded representations for audio and visual features are obtained as $A^N$ and $V^N$.

The timing-detection module 404 receives the encoded hidden vector sequences based on the audio-visual information available at the moment. The role of the timing-detection module 404 is to estimate whether the system should generate a caption or not for the given encoded features. The timing-detection module 404 first processes the encoded vector sequence from each modality with stacked 1D-convolution layers 414 as

$$A_c = \mathrm{Conv1D}(A^N), \quad V_c = \mathrm{Conv1D}(V^N).$$

Each time-convoluted sequences are then summarized into a single vector through pooling 415 and concatenation 416 operations.

$$H = \mathrm{Concat}(\mathrm{MeanPool}(A_c), \mathrm{MeanPool}(V_c)).$$

Feed-forward layer FFN() 417 and sigmoid function $\sigma()$ 418 convert the summary vector to the probability of $\mathcal{D}$, where $\mathcal{D} \in \{0, 1\}$ is a random variable indicating whether a relevant caption can be generated or not.

$$P(\mathcal{D} = 1|X^A, X^V) = \sigma(\mathrm{FFN}(H))$$

$$P(\mathcal{D} = 0|X^A, X^V) = 1 - P(\mathcal{D} = 1|X^A, X^V).$$

Once the timing-detection module 404 provides a higher probability than a threshold, e.g., $P(d = 1|X^A, X^V) > 0.5$, the decoder generates a caption based on the encoded hidden vector sequences ($A^N$, $V^N$).
The decoder 403 iteratively predicts the next word from a starting word (<sos>). At each iteration step, the decoder receives the previously generated words 419, and estimate the posterior probability distribution of the next word 420 by applying word embedding 421, $M$ decoder blocks 422, a linear layer 423, and a softmax operation 424.

Let $Y_i^0$ be partial caption $< sos >, y_1, \ldots, y_i$ after $i$ iterations. Each decoder block 422 has self-attention 425, bi-modal source attention 426, concatenation 427, and feed-forward layer 428 as

$$\overline{Y}_i^m = Y_i^{m-1} + \mathrm{MHA}(Y_i^{m-1}, Y_i^{m-1}, Y_i^{m-1})$$

$$\overline{Y}_i^{Am} = \overline{Y}_i^m + \mathrm{MHA}(\overline{Y}_i^m, A^N, A^N)$$

$$\overline{Y}_i^{Vm} = \overline{Y}_i^m + \mathrm{MHA}(\overline{Y}_i^m, V^N, V^N)$$

$$\tilde{Y}_i^m = \mathrm{Concat}(\overline{Y}_i^{Am}, \overline{Y}_i^{Vm})$$

$$Y_i^m = \tilde{Y}_i^m + \mathrm{FFN}(\tilde{Y}_i^m).$$

The self-attention layer 425 converts the word embedding vectors to high-level representations considering their temporal dependency. The bi-modal source attention layers 426 update the word representations based on the relevance to the encoded multi-modal hidden vector sequences. The feed-forward layer 428 is then applied to the outputs of the bi-modal attention layers after concatenation 427. Finally, the linear transform 423 and the softmax operation 424 are applied to the output of the M-th decoder block to obtain the posterior probability distribution of the next word 420 as

$$P(y_{i+1}|Y_i, A^N, V^N) = \mathrm{Softmax}\left(\mathrm{Linear}(Y_i^M)\right)$$

$$\hat{y}_{i+1} = \operatorname*{argmax}_{y \in \mathcal{V}} P(y_{i+1} = y|Y_i, A^N, V^N),$$

where V denotes the vocabulary.

After picking the one-best word $\hat{y}_{i+1}$, the partial caption is extended by adding the selected word to the previous partial caption as $Y_{i+1} = Y_i, \hat{y}_{i+1}$. This is a greedy search process that ends if $\hat{y}_{i+1} =< eos >$, which represents an end word. The posterior probability distribution of caption $Y$ can be computed as

$$P(\mathcal{Y}|H) = \prod_{i=0}^{L:\hat{y}_{L+1}=<\text{eos}>} P(y_{i+1}|Y_i, A^N, V^N)$$

where $H = (A^N, V^N)$.

It is also possible to pick multiple words with highest probabilities and consider multiple candidates of captions according to the beam search technique in the search module 306.

(Training)

The multi-modal encoder, the timing detector, and the caption decoder are jointly trained, so that the model achieves a caption quality comparable to that for a complete video, even if the given video is shorter than the original one by truncating the later part.

The training process for model $\theta = (\theta_C, \theta_D)$ repeats the following steps:

Sample $T_o \sim$ Uniform($T_s$, $T_e$),

Compute loss $\mathcal{L} = \alpha \mathcal{L}_{CE} + \beta \mathcal{L}_{KL} + \gamma \mathcal{L}_D$,

Update $\theta$ using $\nabla_\theta \mathcal{L}$

(Inference)

The inference is performed in two steps:

Find t that first satisfies $P(\mathcal{D} = 1|X_{s:t}; \theta_D) > F$,
Generate a caption based on

$$\hat{Y} = \underset{Y \in \mathcal{V}^*}{\text{argmax}}\, P(\mathcal{Y} = Y|X_{s:t}; \theta_C),$$

(Evaluation for Low-latency Video Captioining Quality)

FIG. 5 is an evaluation result obtained by performing a video captiong bench marks, according to embodiments of the present invention.

The proposed low-latency caption generation was tested using the ActivityNet Captions dataset Krishna et al. (2017), which consists of 100k caption sentences associated with temporal localization information based on 20k YouTube videos. The dataset is split into 50%, 25%, and 25% for training, validation, and testing. The validation set was split into two subsets on which the performance was reported. The average duration of a video clip is 35.5, 37.7, and 40.2 seconds for the training set and the validation subsets 1 and 2, respectively. VGGish and I3D features were used. The VGGish features were configured to form a 128-dimensional vector sequence for the audio track of each video, where each audio frame corresponds to a 0.96 s segment without overlap. The I3D features were configured to form a 1024-dimensional vector sequence for the video track, where each visual frame corresponds to a 2.56 s segment without overlap.

A multi-modal Transformer was first trained with entire video clips and their ground-truth captions. This model was used as a baseline and teacher model. $N = 2$ was used for encoder blocks and $M = 2$ for decoder blocks, and the number of attention heads was 4. The vocabulary size was 10,172, and the dimension of word embedding vectors was 300.

The proposed model for online captioning was trained with incomplete video clips according to the steps in the invention. In the training process, $\alpha = \beta = \gamma = 1/3$ was used for the loss function. The dimensions of hidden activations in audio and visual attention layers were 128 and 1024, respectively. The timing detector had 2 stacked 1D-convolution layers, with a ReLU non-linearity in between. The performance was measured by BLEU3, BLEU4, and METEOR scores.

The latency ratio indicates the ratio of the video duration used for captioning to the duration of the original video clip. With the baseline model, the latency ratio is always 1, which means all frames are used to generate captions.

FIG. 5 compares captioning methods in METEOR scores on validation subset 1. The model selected for evaluation was trained with S = 0.6 (empirically decided) and had the best METEOR score on validation subset 2. The latency with the detection threshold $F$ was controlled. As shown in Fig. 5, the proposed method at a 55% latency achieves 10.45 METEOR score with only a small degradation, which corresponds to 98% of the baseline score 10.67 . It also achieves 10.00 METEOR score at a 28% latency, which corresponds to 94% of the baseline. A naive method was tested which takes video frames from the beginning with a fixed ratio to the original video length and runs the baseline captioning on the truncated video clip. The results show that the proposed approach clearly outperforms the naive method at an equivalent latency.

The table also includes the results using a unimodal Transformer that receives only the visual feature. The results show that the proposed method works for the visual feature only, but the performance is degraded due to the lack of the audio feature. This result indicates that the audio feature is essential even in the proposed low-latency method.

A low-latency caption is input into an interaction system trained using a pair of captions and action commands to understand scenes and decide next actions. The interaction system may use a sequence-to-sequence neural network model that converts a received caption to a sequence of words for responding to a human or a sequence of action commands to control robots.

Further, some embodiments are based on recognition that the scene-aware interaction technologies allow machines to interact with humans based on shared knowledge obtained through recognizing and understanding their surroundings using various kinds of sensors. Audio-visual scene-aware dialog (AVSD) is one of the scene-aware interaction technologies. According to some recognition based on AVSD, the end-to-end approaches can be better handle flexible conversations between a user and a system by training models on large conversational data sets. Such approaches have been extended to carry out conversations about objects and events taking place around the machines or the users, based on understanding of the dynamic scenes captured by multimodal sensors such as a video camera and a microphone. This extension allows users to ask questions about what is happening in their surroundings. For example, this framework is applicable to visual question answering (VQA) for one-shot QA about a static image, Visual dialog in which an AI agent holds a meaningful dialog with humans about a static image using natural conversational language, Video QA for one-shot QA about a video clip, and AVSD that performs a QA-based dialog with humans about a video clip. Video QA is a QA (question answering) task which consists in answering a single question about video clips such as those found on YouTube, and was formalized within the MSVD (Microsoft Research Video Description Corpus) and MSRVTT (Microsoft Research Video to Text) datasets. AVSD is a multi-turn dialog task which consists in generating responses to a user's questions about daily-life video clips, and has been addressed in the Dialog Systems Technology Challenges (DSTC). AVSD systems are trained to generate sentences to answer user's questions about video clips, where the systems need to understand what, when, how, and by whom events took place based on a time series of audio-visual features to provide correct answers.

At any time instant, countless events that happen in the real world are captured by cameras and stored as massive video data resources. To effectively retrieve such recordings, whether in offline or online settings, since the S2VT (Sequence to Sequence -- Video to Text) system was first proposed, video captioning has been actively researched in the field of computer vision using sequence-to-sequence models in an end-to-end manner. Its goal is to generate a video description (caption) about objects and events in a video clip. To further leverage audio features to identify events, the multimodal attention approach allows to fuse audio and visual features such as VGGish (Visual Geometry Group (VGG)-like audio classification model) and I3D (Interactive Three Dimensional) to generate video captions. Such video clip captioning technologies have been expanded to offline video stream captioning technologies such as dense video captioning and progressive video description generator, where all salient events in a video stream are temporally localized, and event-triggered captions are generated in a multi-thread manner. While all video captioning technologies had so far been based on LSTM, the Transformer can be successfully applied together with the audio-visual attention framework.

Current dialog systems for video QA typically process offline video data to generate answers to questions after the end of a clip. In order for an interaction system to enable real-time conversations about scenes for surveillance and robot applications, it needs to understand scenes and events and respond to user queries about the scenes promptly. In that work, the audio-visual Transformer was tested using the ActivityNet Captions dataset within an offline video captioning system and achieved the best performance for the dense video captioning task.

However, such scene-aware interaction tasks assume that the system can access all frames of the video clip when predicting an answer to a question. This assumption is not practical for real-time dialog systems that are monitoring an ongoing audio-visual scene, where it is essential not only to predict an answer accurately but also to respond to the user as soon as possible by finding the question-related events quickly in the online video stream and generating an appropriate answer. Such functionality requires the development of new low-latency QA techniques.

In previous work, we proposed a low-latency audio-visual captioning method, which can describe events accurately and quickly without waiting for the end of video clips, optimizing the timing for captioning. In parallel, we recently introduced a new AVSD task for the third AVSD challenge at DSTC10 , which notably asks systems to demonstrate temporal reasoning by finding evidence from the video to support their answers. This was based on a new extension of the AVSD dataset for DSTC10, for which we collected human-generated temporal reasoning data. This work proposes to extend our low-latency captioning approach to the scene-aware interaction task, combining it with our reasoning AVSD system to develop a low-latency online scene-aware interaction system.

Some extentions to the work on low-latency video captioning can build a novel approach that can optimize the timing to generate each answer under a trade-off between latency of generation and quality of answer. For video QA, the timing detector is now in charge of finding a timing for the question-relevant event, instead of determining when the system has seen enough to generate a general caption as in the video captioning case. The audio visual scene-aware dialog system built for the 10th Dialog System Technology Challenge can be extended to exploit a low-latency function. For instnace, the experiments with the MSRVTT-QA and AVSD datasets show that our approach achieves between 97% and 99% of the answer quality of the upper bound given by a pre-trained Transformer using the entire video clips, using less than 40% of frames from the beginning.

In the same spirit as the low-latency captioning approach, another system according to another embodiment optimizes the output timing for each answer based on a trade-off between latency and answer quality. We train a low-latency audio-visual Transformer composed of (1) a Transformer-based response generator which tries to generate the ground-truth answer after only seeing a small portion of all video frames, and also to mimic the outputs of a similar pre-trained response generator that is allowed to see the entire video, and (2) a CNN-based timing detector that can find the best timing to output an answer for the input question, such that the responses ultimately generated by the above two Transformers become sufficiently close to each other. The proposed jointly-trained response generator and timing detector can generate answer responses in an early stage of a video clip, as soon as a relevant event happens, and may even forecast future frames. Thanks to the combination of information from multiple modalities, the system has more opportunities to recognize an event at an earlier timing by relying on the earliest cue in one of the modalities. Experiments with the MSR-VTT QA and AVSD datasets show that our approach achieves low-latency video QA with competitive answer quality to an offline video QA baseline that utilizes the entire video frames.

According to an embodiment of the present invention, video QA, which is different from video captioning is provided to generate appropriate answers for a user's questions as soon as possible. To this end, we introduce a question encoder to provide question embeddings to the timing detector, and extend the sentence generator to accept a question as contextual information. Thus, while the proposed method utilizes the same underlying mechanism for low-latency processing, the model is extended for video QA tasks.

(Low-latency video QA model)

We build our proposed model for low-latency video QA upon the DSTC10-AVSD system, which employs an AV-transformer architecture. For the DSTC10-AVSD challenge, we extended the AV-transformer with joint student-teacher learning and attentional multimodal fusion to achieve state-of-the-art performance. As in our low-latency video captioning system, the low-latency QA model receives video and audio features in a streaming manner, and a timing detector decides when to generate an answer response for the feature sequence the model has received until that moment. FIG. 6 illustrates a model architecture (low-latency video QA architecture) 600 for low-latency video QA according to some embodiments of the present invention. The model architecture 600 includes function parts similar to that used in the audio-visual Transformer 400. Identical numbers are used in the figure for the parts (or layers) corresponding to that used in the audio-visual Transformer 400. The low-latency video QA architecture 600 further includes a word embedding 621, a question encoder (text encoder) 613 having a self-attention layer 610 and a feed-forward layer 612, a pooling 615 connected to the contact 416, an AV encoder 402, a timing detector 404, and a response decoder 403, where the AV encoder 402 is shared by the timing detector 404 and the response decoder 403.

Further, the mathematical expressions or equations used to explain the audio-visual Transformer 400 are used in the following descriptions to explain the low-latency video QA architecture 600.

Given a video stream and a question text as inputs, the AV encoder encodes VGGish and I3D features extracted from the audio and video tracks, while a Transformer-based text encoder encodes the question. The sequences of audio and visual features from a starting point to the current time are fed to the encoder, and converted to hidden vector sequences through self-attention, bi-modal attention, and feed-forward layers. This encoder block is repeated $N$ times, and the final encoded representation is obtained via the $N$-th encoder block. The question word sequence is also encoded via a word embedding layer followed by a Transformer with $N'$ blocks.

We denote by $X^A$ and $X^V$ the audio and visual signals, and by $Q$ the question sentence. First, the feature extraction module is applied to the input signals as

$$A^0 = \mathrm{VGGish}(X^A), V^0 = \mathrm{I3D}(X^V), \quad (1)$$

to obtain feature vector sequences corresponding to the VGGish and I3D features, respectively. Each encoder block computes hidden vector sequences as

$$\bar{A}^n = A^{n-1} + \text{MHA}(A^{n-1}, A^{n-1}, A^{n-1}), \quad (2)$$

$$\bar{V}^n = V^{n-1} + \text{MHA}(V^{n-1}, V^{n-1}, V^{n-1}), \quad (3)$$

$$\tilde{A}^n = \bar{A}^n + \text{MHA}(\bar{A}^n, \bar{V}^n, \bar{V}^n), \quad (4)$$

$$\tilde{V}^n = \bar{V}^n + \text{MHA}(\bar{V}^n, \bar{A}^n, \bar{A}^n), \quad (5)$$

$$A^n = \tilde{A}^n + \text{FFN}(\tilde{A}^n), \quad (6)$$

$$V^n = \tilde{V}^n + \text{FFN}(\tilde{V}^n), \quad (7)$$

where MHA and FFN denote multi-head attention and feed-forward network, respectively. Layer normalization is applied before every MHA and FFN layers, but it is omitted from the equations for simplicity. MHA takes three arguments, query, key, and value vector sequences. The self-attention layer extracts temporal dependency within each modality, where the arguments for MHA are all the same, i.e., $A^{n-1}$ or $V^{n-1}$, as in (2) and (3). The bi-modal attention layers further extract cross-modal dependencies between audio and visual features, taking the keys and values from the other modality as in (4) and (5). The feed-forward layers are then applied in a point-wise manner. The encoded representations for audio and visual features are obtained as $A^N$ and $V^N$. Question Q is also encoded using a Transformer with $N'$ blocks as

$$Q^0 = \text{WordEmbedding}(Q), \quad (8)$$

$$\bar{Q}^{n'} = Q^{n'-1} + \text{MHA}(Q^{n'-1}, Q^{n'-1}, Q^{n'-1}), \quad (9)$$

$$Q^{n'} = \bar{Q}^{n'} + \text{FFN}(\bar{Q}^{n'}). \quad (10)$$

With the AV encoder and the question encoder, we obtain encoded representations A and *V* of the audio-visual features, and *Q* of the question word sequence $\overline{Q}$. The timing detector receives the encoded representations A and V available up to the current time and the encoding Q of the input question. The role of the timing detector is to decide whether the system should generate an answer or not for the given encoded features and the question. The detector first processes the encoded vector sequence from each modality with stacked 1D-convolution layers (Conv1d) as

$$A' = \text{Conv1d}(A), V' = \text{Conv1d}(V). \quad (11)$$

These time-convoluted sequences and the question encoding are then summarized into a single vector through mean pooling and concatenation operations:

$$\mathcal{H} = \text{Concat}(\text{Mean}(A'), \text{Mean}(V'), \text{Mean}(Q)). \quad (12)$$

A feed-forward layer FFN and sigmoid function $\sigma$ convert the summary vector to the probability of d, where d indicates whether a relevant answer can be generated or not:

$$P(d = 1|A, V, Q) = \sigma(\text{FFN}(\mathcal{H})). \quad (13)$$

Once the timing detector outputs a probability higher than a threshold, e.g., $P(d = 1|A, V, Q) > 0.5$, the decoder generates an answer based on the encoded representations.

The decoder iteratively predicts the next word, starting from question word sequence $\bar{Q}$ plus a starting token <sos>. At each iteration step, it receives the partial answer sentence that has already been generated, and predicts the next word by applying $M$ decoder blocks and a prediction network. Let $Y_i$ be a partial answer sentence $< sos >, y_1, ..., y_i$ after $i$ iterations and $y_i^0$ be its question-conditioned sequence $\bar{Q}^0 Y_i^0$, where each word in the question and the partial answer sentence is converted to a word embedding vector. Each decoder block has self-attention, bi-modal source attention, and feed-forward layers:

$$\bar{y}_i^m = y_i^{m-1} + \text{MHA}(y_i^{m-1}, y_i^{m-1}, y_i^{m-1}), \quad (14)$$

$$\bar{y}_i^{Am} = \bar{y}_i^m + \text{MHA}(\bar{y}_i^m, A, A), \quad (15)$$

$$\bar{y}_i^{Vm} = \bar{y}_i^m + \text{MHA}(\bar{y}_i^m, V, V), \quad (16)$$

$$\tilde{y}_i^m = \text{Concat}(\bar{y}_i^{Am}, \bar{y}_i^{Vm}), \quad (17)$$

$$y_i^m = \tilde{y}_i^m + \text{FFN}(\tilde{y}_i^m), \quad (18)$$

where MHA denotes a multi-head attention network. The self-attention layer maps the word embedding vectors to high-level representations that contain their temporal dependency in (14). The bi-modal attention layers update the word representations based on the relevance to the encoded bi-modal representations in (15) and (16). The feed-forward layer converts the concatenated outputs of the bi-modal attention layers in (17) and (18). These operations are repeated to the $M$-th block. The linear transform and the softmax operation are applied to the $M$-th output to obtain the probability distribution of the next word as

$$P(y_{i+1}|\bar{Q}Y_i, A, V) = \text{Softmax}(\text{Linear}(y_i^M)), \quad (19)$$

$$\hat{y}_{i+1} = \underset{y \in \mathcal{V}}{\text{argmax}} P(y_{i+1} = y|\bar{Q}Y_i, A, V), \quad (20)$$

where V denotes the vocabulary. The partial answer is extended by appending the best word $\hat{y}_{i+1}$ to the previous partial sentence as $Y_{i+1} = Y_i, \hat{y}_{i+1}$. This is a greedy search process repeated until it receives an end-of-sentence token $< eos >$ as $\hat{y}_{i+1}$. We can also use a beam search technique, which selects top-K words with highest probabilities and keeps multiple word sequences. Finally, the best word sequence is selected as the final answer for the input question.

(Training and inference)

We jointly train the AV encoder, the question encoder, the response decoder, and the timing detector, so that the system achieves an answer quality comparable to that for a complete video, even if the given video is shorter than the original one by truncating the later part.

We utilize two loss functions, a response loss to improve the answer quality and a timing detection loss to detect a proper timing to emit an answer sentence. FIG. 7 illustrates a video stream, where the video has started at time $T_s$ and ends at $T_e$, which are associated with ground-truth answer $Y_{e'}$. If time $T_o$ is picked as the emission timing, the response decoder generates an answer based on the audio-visual signals $X_{T_s:T_o} = (A_{T_s:T_o}, V_{T_s:T_o})$ from time $T_s$ to time $T_o$, and the question $\bar{Q}$.

The response loss is based on a standard cross-entropy loss for the ground-truth answer $Y_{e'}$,

$$\mathcal{L}_{CE} = -\log P(Y_{e'} |X_{T_s:T_o}, \bar{Q}; \theta_R), \quad (21)$$

and a Kullbackâ "Leibler (KL) divergence loss between predictions from a pre-trained model allowed to process the complete video and the target model that can only process incomplete videos, i.e.,

$$\mathcal{L}_{KL} = -\sum_{i=1}^{|Y_{e'}|} \sum_{y\in\mathcal{V}} P(y|Y_{e,i}{}',X_{T_s:T_e},\bar{Q};\bar{\theta}_R)$$

$$\log P(y|Y_{e,i}{}',X_{T_s:T_o},\bar{Q};\theta_R). \quad (22)$$

This student-teacher learning approach can exploit the superior description power of the teacher model $\bar{\theta}_R$, which predicts an answer using entire video clip $X_{T_s:T_e}$, by pushing the student model $\theta_R$ to mimic the teacher's predictions using only the truncated video clip $X_{T_s:T_o}$. This improves the training stability and leads to better performance.

The timing detection loss is based on a binary cross-entropy for appropriate timings. In general, however, such timing information does not exist in the training data set. As in [?], we decide the right timing based on whether or not the response decoder can generate an appropriate answer, that is, an answer sufficiently close to the ground-truth $Y_{e'}$, or the answer $\hat{Y}_e$ generated for the entire video clip $X_{T_s:T_e}$ using the pre-trained model $\bar{\theta}_R$. The detection loss is computed as

$$\mathcal{L}_D = -\log P(d|X_{T_s:T_o},\bar{Q};\theta_D), \quad (23)$$

where d is determined based on

$$d = \begin{pmatrix} 1 & \text{if}\max(\text{Sim}(Y_{e'},\hat{Y}_o),\text{Sim}(\hat{Y}_e,\hat{Y}_o)) \geq S, \\ 0 & \text{otherwise,} \end{pmatrix} \quad (24)$$

where $\text{Sim}(\cdot,\cdot)$ denotes a similarity measure between two word sequences. In this work, we use the matched word percentage computed in a teacher-forcing manner, where we obtain $\hat{Y}_e$ and $\hat{Y}_o$ as sequences of highest-probability words given the ground-truth word sequence as the left context, and count the matched words between them. $S \in (0,1]$ is a pre-determined threshold which judges whether or not the online answer $\hat{Y}_o$ is sufficiently close to the references $Y_{e'}$ and $\hat{Y}_e$.

The model $\theta = (\theta_R, \theta_D)$ is trained by repeating the steps of sampling the emission timing $T_o \sim Uniform(T_s,T_e)$, computing the loss $\mathcal{L} = \alpha\mathcal{L}_{CE} + \beta\mathcal{L}_{KL} + \gamma\mathcal{L}_D$, and updating the parameters $\theta$ using $\nabla_\theta\mathcal{L}$.

At inference time, the emission time $\hat{T}_o$ is determined as the first time that meets $P(d=1|_{XT_s:\hat{T}_o},\bar{Q};\theta_D) > F$, where F is a pre-determined threshold controlling the sensitivity of timing detection. An answer is then generated based on

$$\hat{Y}_o = \underset{Y\in\mathcal{V}^*}{\text{argmax}} P(Y|X_{T_s:\hat{T}_o},\bar{Q};\theta_R). \quad (25)$$

Note that we assume that $T_s$ is already determined.

According to some embodiments of the present invention, an artificial intelligence (AI) low-latency processing system is provided. FIG. 8 shows a computuer-implemented method 800 including process steps performed by the low-latency processing system using a processor and a memory or memory storages, according to an embodiment of the present invention.

The low-latency processing system may include a processor and a memory having instructions as a computer-implemented method 800 stored thereon that, when executed by the processor, cause the low-latency processing system to collect a sequence of frames jointly including information dispersed among at least some frames in the sequence of frames; execute a timing neural network trained to identify an early subsequence of frames in the sequence of frames including at least a portion of the information indicative of the information; execute a decoding neural network trained to decode the information from the portion of the information in the subsequence of frames, wherein the timing neural network is jointly trained with the decoding neural network to iteratively identify the smallest number of subframes from the beginning of a training sequence of frames containing a portion of training information sufficient to decode the training information.

In some cases, the timing detector neural network is jointly trained with the decoder neural network on features of different subsequences of the sequence of frames to minimize a multi-task loss function including a time detection loss and an information generation loss. The multi-task loss function may include three losses defining (1) an accuracy of decoded information, (2) a difference between the information decoded from the subsequence of frames and the information decoded from the full sequence of frames, and (3) an accuracy of prediction of the timing detector neural network. Further, the processor may be configured to execute a feature extractor neural network to extract features from each frame in the sequence of frames; execute a feature encoder neural network to encode the extracted features of each frame to produce a sequence of encoded features; submit the sequence of encoded features to the timing detector neural network and to identify a subsequence of encoded features representing the subsequence of frames; and submit the subsequence of encoded features to the decoder neural network to decode the information. For the other cases, the processor may trigger the execution of modules of the AI low-latency processing system upon receiving a new input frame appended to the sequence of frames. The information can be a caption for an audio scene, a video scene, or an audio-video scene. Also, the information is an answer to a question about the sequence of frames. In some cases, the frames may include multi-model information coming from different sensors of different modalities. Further, the information may be an answer to a question about the sequence of frames, wherein the processor executes a text encoder neural network to encode the question, submits the encoded question to the timing neural network, and submits the question or the encoded question to the decoding neural network.

(Experiments)

We evaluate our low-latency video QA method using the MSRVTT-QA and AVSD datasets. MSRVTT-QA is based on the MSR-VTT dataset, which contains 10k video clips and 243k question-answer (QA) pairs. The QA pairs are generated automatically from the manually-annotated captions for each video clip, where the question is a sentence and the answer is a single word. We follow the data split in the MSR-VTT dataset which is 65% for training, 5% for validation, and 30% for test. AVSD is a set of text-based dialogs on short videos from the Charades dataset, which consists of untrimmed multi-action videos, which each include an audio track. In AVSD, two parties, dubbed *questioner* and *answerer,* have a dialog about events in the provided video. The job of the answerer, who has already watched the video, is to answer questions asked by the questioner. We follow the AVSD challenge setting, where the train, validation, and test sets consist of 7.7k, 1.8k, and 1.8k dialogs, respectively, and each dialog includes 10-turn QA pairs, where both questions and answers are sentences. The duration of video clips ranges from 10 to 40 seconds.

The VGGish features were configured to form a 128-dimensional vector sequence for the audio track of each video, where each audio frame corresponds to a 0.96 s segment without overlap. The I3D features were configured to form a 2048-dimensional vector sequence for the video track, where each visual frame corresponds to a 2.56 s segment without overlap.

We first trained a multi-modal Transformer with entire video clips and QA pairs. This model was used as a baseline and teacher model. We used $N = 2$ audio-visual encoder blocks, $N' = 4$ question encoder blocks, $M = 4$ decoder blocks, and set the number of attention heads to 4. The vocabulary size was 7,599 for MSRVTT-QA and 3,669 for AVSD. The dimension of the word embedding vectors was 300.

The proposed model for low-latency video QA was trained with incomplete video clips according to the steps in Section 3.2. The architecture was the same as the baseline/teacher model except for the addition of the timing detector. In the training process, we consistently used $\alpha = \beta = \gamma = 1/3$ for the loss function and threshold $S = 0.9$ in Eq. (24). We set the dimensions of the hidden activations in the audio and visual attention layers to 256 and 1024, respectively, the dropout rate to 0.1, and we applied a label smoothing technique. The timing detector consisted of 2 stacked 1D-convolution layers with a ReLU non-linearity in between. The performance was measured by answer accuracy for MSRVTT-QA, and BLEU4 and METEOR scores for AVSD.

FIG. 9 shows the relationship between latency ratio and answer accuracy on MSRVTT-QA. The latency ratio denotes the ratio of actually used frames (from the beginning) to the entire video frames. The baseline results were obtained with the baseline (teacher) model by simply omitting the future frames at various ratios. Results for the proposed models were obtained by changing the detection threshold F. The accuracy for MSRVTT-QA shows a percentage of one-word answers matching with the ground-truths. The result demonstrates that our proposed method achieves low-latency video QA with much smaller accuracy degradation compared to the baseline. Our approach achieves 97% of the answer quality of the upper bound given by the pre-trained Transformer using the entire video clips, using only 40% of frames from the beginning.

FIG. 10 shows a comparison of the quality of answer sentences on the AVSD task. We controlled the latency ratio by setting the detection threshold F to obtain average ratios of 1.0, 0.5, and 0.2 for the proposed method. We omitted the future frames with the above fixed ratios for the baseline system. As shown in the table, our proposed method slightly outperforms the baseline even with 1.0 latency. This could be due to the increased robustness of the model by training with randomly truncated video. Moreover, the proposed method keeps the same level of BLEU4 and METEOR scores at the 0.5 latency and achieves competitive scores even at the 0.2 latency with little degradation, reaching 98% to 99% of the scores at the 1.0 latency condition.

FIG. 11A and FIG. 11B show the distribution of the QAs over the latency with detection thresholds $F = 0.3$ and $F = 0.4$ on the AVSD-DSTC7 task, which correspond to the results for latency 0.2 (left) and 0.5 (right) in FIG. 10. These results illustrate that most of the QAs of AVSD require either only the early frames or all frames to generate accurate answers. We investigated the reason for the polarized distribution. The most frequent pattern for questions leading to an early decision is "How does the video starts?". Furthermore, there are some consistent answers such as "one person" in response to "How many people are in the videos?" in the training data. Such frequent linguistic patterns could also be a cause for the early decision. The late decision case contains such patterns as "How does the video ends?". Such a question is natural for questioners who need to generate video captions through 10 QAs without watching the full videos.

According to some examples described above, a low-latency video QA method can answer a user's questions accurately and quickly without waiting for the end of video clips. The proposed method optimizes each answer's output timing based on a trade-off between latency and answer quality. The system described above can generate answers in early stages of video clips using the MSRVTT-QA and AVSD datasets, achieving between 97% and 99% of the answer quality of the upper bound given by a pre-trained Transformer using the entire video clips, using less than 40% of frames from the beginning.

## Claims

1. An artificial intelligence, AI, low-latency processing system (200), the low-latency processing system (200) comprising: a processor (220); and a memory (240) having instructions stored thereon that, when executed by the processor (220), cause the low-latency processing system (200) to:

   collect a sequence of frames of a video stream, the sequence of frames jointly including information dispersed among at least some frames in the sequence of frames;
   execute a timing neural network trained to identify an early subsequence of frames in the sequence of frames including at least a portion of the information indicative of the information;
   execute a decoding neural network trained to decode the information from the portion of the information in the subsequence of frames,
   wherein the information is a caption for an audio scene, a video scene, or an audio-video scene; and
   wherein the timing neural network is jointly trained with the decoding neural network to iteratively identify the smallest number of subframes from the beginning of a training sequence of frames containing a portion of training information sufficient to decode the training information;
   wherein the processor (220) is configured to

   execute a feature extractor neural network to extract features from each frame in the sequence of frames, wherein the feature extractor neural network is configured to extract the features from an audio signal $X^A$ and a visual signal $X^V$ from audio and visual tracks of the video stream;
   execute a feature encoder neural network to encode the extracted features of each frame to produce a sequence of encoded features;
   submit the sequence of encoded features to the timing detector neural network and to identify a subsequence of encoded features representing the subsequence of frames; and
   submit the subsequence of encoded features to the decoder neural network to decode the information;

   wherein encoded representations for audio and visual features are obtained as $A^N$ and $V^N$;
   wherein the timing neural network is configured to process an encoded vector sequence from each modality with stacked 1D-convolution layers (414) as

   $$A_c = \mathrm{Conv1D}(A^N), V_c = \mathrm{Conv1D}(V^N);$$

   wherein the timing neural network is configured to summarize each time-convoluted sequence into a single vector, the summary vector $H$, through pooling (415) and concatenation (416) operations:

   $$H = \mathrm{Concat}(\mathrm{MeanPool}(A_c), \mathrm{MeanPool}(V_c));$$

   wherein the timing neural network comprises a feed-forward layer FFN() (417) and sigmoid function $\sigma()$ (418) configured to convert the summary vector $H$ to a probability of $\mathcal{D}$, where $\mathcal{D} \in \{0, 1\}$ is a random variable indicating whether a relevant caption can be generated or not:

$$P(\mathcal{D} = 1 | X^A, X^V) = \sigma(\text{FFN}(H))$$

$$P(\mathcal{D} = 0 | X^A, X^V) = 1 - P(\mathcal{D} = 1 | X^A, X^V);$$

wherein the decoding neural network is configured to generate the caption based on the encoded representations for audio and visual features $A^N$, $V^N$ once the timing neural network provides a higher probability than a threshold.

2. The AI low-latency processing system (200) of claim 1, wherein the timing detector neural network is jointly trained with the decoder neural network on features of different subsequences of the sequence of frames to minimize a multi-task loss function including a time detection loss and an information generation loss.

3. The AI low-latency processing system (200) of claim 2, wherein the multi-task loss function includes three losses defining (1) an accuracy of decoded information, (2) a difference between the information decoded from the subsequence of frames and the information decoded from the full sequence of frames, and (3) an accuracy of prediction of the timing detector neural network.

4. The AI low-latency processing system (200) of claim 1, wherein the processor (220) triggers the execution of modules of the AI low-latency processing system upon receiving a new input frame appended to the sequence of frames.

5. A computer-implemented method (800) for an artificial intelligence, AI, low-latency processing system (200) including a processor (220) and a memory (240) storing instructions of the computer-implemented method performing steps using the processor (220), the steps comprising:

collecting (810) a sequence of frames of a video stream, the sequence of frames jointly including information dispersed among at least some frames in the sequence of frames;
executing (820) a timing neural network trained to identify an early subsequence of frames in the sequence of frames including at least a portion of the information indicative of the information; and
executing (830) a decoding neural network trained to decode the information from the portion of the information in the subsequence of frames,
wherein the information is a caption for an audio scene, a video scene, or an audio-video scene; and
wherein the timing neural network is jointly trained with the decoding neural network to iteratively identify the smallest number of subframes from the beginning of a training sequence of frames containing a portion of training information sufficient to decode the training information;
wherein the processor (220) is configured to

execute a feature extractor neural network to extract features from each frame in the sequence of frames, wherein the feature extractor neural network extracts the features from an audio signal $X^A$ and a visual signal $X^V$ from audio and visual tracks of the video stream;
execute a feature encoder neural network to encode the extracted features of each frame to produce a sequence of encoded features;
submit the sequence of encoded features to the timing detector neural network and to identify a subsequence of encoded features representing the subsequence of frames; and
submit the subsequence of encoded features to the decoder neural network to decode the information;

wherein encoded representations for audio and visual features are obtained as $A^N$ and $V^N$;
wherein the timing neural network processes an encoded vector sequence from each modality with stacked 1D-convolution layers (414) as

$$A_c = \text{Conv1D}(A^N), V_c = \text{Conv1D}(V^N);$$

wherein the timing neural network summarizes each time-convoluted sequence into a single vector, the summary vector $H$, through pooling (415) and concatenation (416) operations:

$$H = \text{Concat}(\text{MeanPool}(A_c), \text{MeanPool}(V_c));$$

wherein the timing neural network comprises a feed-forward layer FFN() (417) and sigmoid function $\sigma()$ (418) that convert the summary vector $H$ to a probability of $\mathcal{D}$, where $\mathcal{D} \in \{0, 1\}$ is a random variable indicating whether a relevant caption can be generated or not:

$$P(\mathcal{D} = 1 | X^A, X^V) = \sigma(\text{FFN}(H))$$

$$P(\mathcal{D} = 0 | X^A, X^V) = 1 - P(\mathcal{D} = 1 | X^A, X^V);$$

wherein the decoding neural network generates the caption based on the encoded representations for audio and visual features $A^N$, $V^N$ once the timing neural network provides a higher probability than a threshold.

6. The computer-implemented method (800) of claim 5, wherein the timing detector neural network is jointly trained with the decoder neural network on features of different subsequences of the sequence of frames to minimize a multi-task loss function including a time detection loss and an information generation loss.

7. The computer-implemented method (800) of claim 6, wherein the multi-task loss function includes three losses defining (1) an accuracy of decoded information, (2) a difference between the information decoded from the subsequence of frames and the information decoded from the full sequence of frames, and (3) an accuracy of prediction of the timing detector neural network.

8. The computer-implemented method (800) of claim 5, wherein the processor (220) triggers the execution of modules of the AI low-latency processing system upon receiving a new input frame appended to the sequence of frames.

**Patentansprüche**

1. Künstliche-Intelligenz, KI,-Niedriglatenz-Verarbeitungssystem (200), wobei das Niedriglatenz-Verarbeitungssystem (200) umfasst: einen Prozessor (220); und einen Arbeitsspeicher (240), in dem Anweisungen gespeichert sind, die, bei Ausführung durch den Prozessor (220), das Niedriglatenz-Verarbeitungssystem (200) veranlassen zum:

Sammeln einer Folge von Frames eines Videostreams, wobei die Folge von Frames gemeinsam Informationen aufweist, die über mindestens einige Frames in der Folge von Frames verteilt sind;
Ausführen eines neuronalen Timing-Netzes, das trainiert ist, eine frühe Teilfolge von Frames in der Folge von Frames zu identifizieren, die mindestens einen Teil der Informationen aufweist, die die Informationen angeben;
Ausführen eines neuronalen Dekodiernetzes, das trainiert ist, die Informationen von dem Teil der Informationen in der Teilfolge von Frames zu dekodieren,
wobei die Informationen eine Beschriftung für eine Audioszene, eine Videoszene oder eine Audio-Videoszene sind; und
wobei das neuronale Timing-Netz gemeinsam mit dem neuronalen Dekodiernetz trainiert ist, um iterativ die kleinste Anzahl von Subframes vom Beginn einer Trainingsfolge von Frames zu identifizieren, die einen Teil der Trainingsinformationen aufweisen, der ausreicht, um die Trainingsinformationen zu dekodieren;
wobei der Prozessor (220) eingerichtet ist zum

Ausführen eines neuronalen Merkmalsextraktionsnetzes zum Extrahieren von Merkmalen aus jedem Frame in der Folge von Frames, wobei das neuronale Merkmalsextraktionsnetz eingerichtet ist, die Merkmale aus einem Audiosignal $X^A$ und einem visuellen Signal $X^V$ aus Audio- und visuellen Spuren des Videostreams zu extrahieren;
Ausführen eines neuronalen Merkmalskodiernetzes, um die extrahierten Merkmale jedes Frames zu kodieren, um eine Folge von kodierten Merkmalen zu erstellen;
Übermitteln der Folge von kodierten Merkmalen an das neuronale Timing-Erzeugungsnetz und Identifizieren einer Teilfolge von kodierten Merkmalen, die die Teilfolge von Frames darstellt; und
Übermitteln der Teilfolge von kodierten Merkmalen an das neuronale Dekodiernetz, um die Informationen zu dekodieren;

wobei die kodierten Repräsentationen für Audio- und visuelle Merkmale als $A^N$ und $V^N$ erhalten werden;
wobei das neuronale Timing-Netz eingerichtet ist, eine kodierte Vektorfolge von jeder Modalität mit gestapelten 1D-Faltungsschichten (414) zu verarbeiten als

$$A_c = \mathrm{Conv1D}(A^N),\ V_c = \mathrm{Conv1D}(V^N);$$

wobei das neuronale Timing-Netz eingerichtet ist, jede zeitlich gefaltete Folge durch Pooling- (415) und Verkettungsoperationen (416) zu einem einzigen Vektor, dem Zusammenfassungsvektor H, zusammenzufassen:

$$H = \mathrm{Concat}(\mathrm{MeanPool}(A_c),\ \mathrm{MeanPool}(V_c));$$

wobei das neuronale Timing-Netz eine Feed-Forward-Schicht FFN() (417) und eine Sigmoidfunktion $\sigma()$ (418) umfasst, eingerichtet, um den Zusammenfassungsvektor H in eine Wahrscheinlichkeit von D umzuwandeln, wobei $D \in \{0,1\}$ eine Zufallsvariable ist, die angibt, ob eine relevante Beschriftung erzeugt werden kann oder nicht:

$$P(\mathcal{D} = 1 \,|\, X^A,\ X^V) = \sigma(\mathrm{FFN}(H))$$

$$P(\mathcal{D} = 0 \,|\, X^A,\ X^V) = 1 - P(\mathcal{D} >= 1 \,|\, X^A,\ X^V);$$

wobei das neuronale Dekodiernetz eingerichtet ist, die Beschriftung auf der Grundlage der kodierten Repräsentationen für die Audio- und visuellen Merkmale $A^n$, $V^n$ zu erzeugen, sobald das neuronale Timing-Netz eine höhere Wahrscheinlichkeit als einen Schwellenwert bereitstellt.

2. KI-Niedriglatenz-Verarbeitungssystem (200) nach Anspruch 1, wobei das neuronale Timing-Erfassungsnetz gemeinsam mit dem neuronalen Dekodiernetz auf Merkmale verschiedener Teilfolgen der Folge von Frames trainiert ist, um eine Multitask-Verlustfunktion zu minimieren, die einen Zeiterfassungsverlust und einen Informationserzeugungsverlust aufweist.

3. KI-Niedriglatenz-Verarbeitungssystem (200) nach Anspruch 2, wobei die Multitask-Verlustfunktion drei Verluste aufweist, die (1) eine Genauigkeit der dekodierten Informationen, (2) eine Differenz zwischen den aus der Teilfolge von Frames dekodierten Informationen und den aus der vollständigen Folge von Frames dekodierten Informationen und (3) eine Genauigkeit der Vorhersage des neuronalen Timing-Erfassungsnetzes definieren.

4. KI-Niedriglatenz-Verarbeitungssystem (200) nach Anspruch 1, wobei der Prozessor (220) die Ausführung von Modulen des KI-Niedriglatenz-Verarbeitungssystems auslöst, wenn ein neuer Eingangs-Frame empfangen wird, der an die Folge von Frames angehängt ist.

5. Computerimplementiertes Verfahren (800) für ein Künstliche-Intelligenz, KI,-Niedriglatenz-Verarbeitungssystem (200), das einen Prozessor (220) und einen Arbeitsspeicher (240) aufweist, der Anweisungen des computerimplementierten Verfahrens speichert, das Schritte unter Verwendung des Prozessors (220) durchführt, wobei die Schritte umfassen:

Sammeln (810) einer Folge von Frames eines Videostreams, wobei die Folge von Frames gemeinsam Informationen aufweist, die über mindestens einige Frames in der Folge von Frames verteilt sind;
Ausführen (820) eines neuronalen Timing-Netzes, das trainiert ist, eine frühe Teilfolge von Frames in der Folge von Frames zu identifizieren, die mindestens einen Teil der Informationen aufweist, die die Informationen angeben; und
Ausführen (830) eines neuronalen Dekodiernetzes, das trainiert ist, die Informationen von dem Teil der Informationen in der Teilfolge von Frames zu dekodieren,
wobei die Informationen eine Beschriftung für eine Audioszene, eine Videoszene oder eine Audio-Videoszene sind; und
wobei das neuronale Timing-Netz gemeinsam mit dem neuronalen Dekodiernetz trainiert ist, um iterativ die kleinste Anzahl von Subframes vom Beginn einer Trainingsfolge von Frames zu identifizieren, die einen Teil der Trainingsinformationen aufweisen, der ausreicht, um die Trainingsinformationen zu dekodieren;
wobei der Prozessor (220) eingerichtet ist zum

Ausführen eines neuronalen Merkmalsextraktionsnetzes zum Extrahieren von Merkmalen aus jedem Frame in der Folge von Frames, wobei das neuronale Merkmalsextraktionsnetz die Merkmale aus einem Audiosignal $X^A$ und einem visuellen Signal $X^V$ aus Audio- und visuellen Spuren des Videostreams extrahiert;

Ausführen eines neuronalen Merkmalskodiernetzes, um die extrahierten Merkmale jedes Frames zu kodieren, um eine Folge von kodierten Merkmalen zu erstellen;

Übermitteln der Folge von kodierten Merkmalen an das neuronale Timing-Erzeugungsnetz und Identifizieren einer Teilfolge von kodierten Merkmalen, die die Teilfolge von Frames darstellt; und

Übermitteln der Teilfolge von kodierten Merkmalen an das neuronale Dekodiernetz, um die Informationen zu dekodieren;

wobei die kodierten Repräsentationen für Audio- und visuelle Merkmale als $A^n$ und $V^N$ erhalten werden;

wobei das neuronale Timing-Netz eine kodierte Vektorfolge von jeder Modalität mit gestapelten 1D-Faltungsschichten (414) verarbeitet als

$$A_c = \mathrm{Conv1D}(A^N), V_c = \mathrm{Conv1D}(V^N);$$

wobei das neuronale Timing-Netz jede zeitlich gefaltete Folge durch Pooling- (415) und Verkettungsoperationen (416) zu einem einzigen Vektor, dem Zusammenfassungsvektor H, zusammenzufasst:

$$H = \mathrm{Concat}(\mathrm{MeanPool}(A_c), \mathrm{MeanPool}(V_c));$$

wobei das neuronale Timing-Netz eine Feed-Forward-Schicht FFNQ (417) und eine Sigmoidfunktion $\sigma()$ (418) umfasst, die den Zusammenfassungsvektor H in eine Wahrscheinlichkeit von D umwandeln, wobei $D \in \{0,1\}$ eine Zufallsvariable ist, die angibt, ob eine relevante Beschriftung erzeugt werden kann oder nicht:

$$P(\mathcal{D} = 1 \mid X^A, X^V) = \sigma(\mathrm{FFN}(H))$$

$$P(\mathcal{D} = 0 \mid X^A, X^V) = 1 - P(\mathcal{D} = 1 \mid X^A, X^V);$$

wobei das neuronale Dekodiernetz die Beschriftung auf der Grundlage der kodierten Repräsentationen für die Audio- und visuellen Merkmale $A^N$, $V^N$ erzeugt, sobald das neuronale Timing-Netz eine höhere Wahrscheinlichkeit als einen Schwellenwert bereitstellt.

6. Computerimplementiertes Verfahren (800) nach Anspruch 5, wobei das neuronale Timing-Erfassungsnetz gemeinsam mit dem neuronalen Dekodiernetz auf Merkmale verschiedener Teilfolgen der Folge von Frames trainiert ist, um eine Multitask-Verlustfunktion zu minimieren, die einen Zeiterfassungsverlust und einen Informationserzeugungsverlust aufweist.

7. Computerimplementiertes Verfahren (800) nach Anspruch 6, wobei die Multitask-Verlustfunktion drei Verluste aufweist, die (1) eine Genauigkeit der dekodierten Informationen, (2) eine Differenz zwischen den aus der Teilfolge von Frames dekodierten Informationen und den aus der vollständigen Folge von Frames dekodierten Informationen und (3) eine Genauigkeit der Vorhersage des neuronalen Timing-Erfassungsnetzes definieren.

8. Computerimplementiertes Verfahren (800) nach Anspruch 5, wobei der Prozessor (220) die Ausführung von Modulen des KI-Niedriglatenz-Verarbeitungssystems auslöst, wenn ein neuer Eingangs-Frame empfangen wird, der an die Folge von Frames angehängt ist.

## Revendications

1. Système de traitement à faible latence d'intelligence artificielle, IA, (200), le système de traitement à faible latence (200) comprenant : un processeur (220) ; et une mémoire (240) sur laquelle sont stockées des instructions qui, lorsqu'elles sont exécutées par le processeur (220), amènent le système de traitement à faible latence (200) à :

collecter une séquence de trames d'un flux vidéo, la séquence de trames incluant conjointement des informations dispersées parmi au moins certaines trames dans la séquence de trames ;

exécuter un réseau neuronal de synchronisation soumis à un apprentissage pour identifier une sous-séquence précoce de trames dans la séquence de trames, incluant au moins une partie des informations indicatives des informations ;

exécuter un réseau neuronal de décodage soumis à un apprentissage pour décoder les informations de la partie des informations dans la sous-séquence de trames,

dans lequel les informations sont une légende pour une scène audio, une scène vidéo ou une scène audio-vidéo ; et

dans lequel le réseau neuronal de synchronisation est formé conjointement avec le réseau neuronal de décodage pour identifier de manière itérative le plus petit nombre de sous-trames depuis le début d'une séquence d'apprentissage de trames contenant une partie d'informations d'apprentissage suffisante pour décoder les informations d'apprentissage ;

dans lequel le processeur (220) est configuré pour

exécuter un réseau neuronal d'extraction de caractéristiques pour extraire des caractéristiques à partir de chaque trame dans la séquence de trames, dans lequel le réseau neuronal d'extraction de caractéristiques est configuré pour extraire les caractéristiques depuis un signal audio $X^A$ et un signal visuel $X^V$ à partir de pistes audio et visuelles du flux vidéo ;

exécuter un réseau neuronal de codeur de caractéristiques pour coder les caractéristiques extraites de chaque trame afin de produire une séquence de caractéristiques codées ;

soumettre la séquence de caractéristiques codées au réseau neuronal de détecteur de synchronisation et identifier une sous-séquence de caractéristiques codées représentant la sous-séquence de trames ; et

soumettre la sous-séquence de caractéristiques codées au réseau neuronal de décodeur afin de décoder les informations ;

dans lequel des représentations codées pour des caractéristiques audio et visuelles sont obtenues en tant que $A^N$ et $V^N$ ;

dans lequel le réseau neuronal de synchronisation est configuré pour traiter une séquence vectorielle codée à partir de chaque modalité avec des couches de convolution 1D empilées (414) sous la forme

$$A_C = \text{Conv1D}(A^N), \; V_C = \text{Conv1D}(V^N) \; ;$$

dans lequel le réseau neuronal de synchronisation est configuré pour résumer chaque séquence à variation temporelle en un vecteur unique, le vecteur de résumé H, par des opérations de regroupement (415) et de concaténation (416) :

$$H = \text{Concat}(\text{MeanPool}(A_C), \; \text{MeanPool}(V_C) \; ;$$

dans lequel le réseau neuronal de synchronisation comprend une couche à action directe FFN() (417) et une fonction sigmoïde $\sigma()$ (418) configurées pour convertir le vecteur de résumé H en une probabilité de $\mathcal{D}$, où $\mathcal{D} \in \{0, 1\}$ est une variable aléatoire indiquant si une légende pertinente peut être générée ou non :

$$P(\mathcal{D} = 1 \,|\, X^A, X^V) = \sigma(\text{FFN}(H))$$

$$P(\mathcal{D} = 0 \,|\, X^A, X^V) = 1 - P(\mathcal{D} >= 1 \,|\, X^A, X^V) \; ;$$

dans lequel le réseau neuronal de décodage est configuré pour générer la légende sur la base des représentations codées pour des caractéristiques audio et visuelles $A^N$, $V^N$ une fois que le réseau neuronal de synchronisation fournit une probabilité supérieure à un seuil.

2. Système de traitement à faible latence d'IA (200) selon la revendication 1, dans lequel le réseau neuronal de détecteur de synchronisation est formé conjointement avec le réseau neuronal de décodeur sur des caractéristiques de différentes sous-séquences de la séquence de trames pour minimiser une fonction de perte multitâche incluant une perte de détection de temps et une perte de génération d'informations.

3. Système de traitement à faible latence d'IA (200) selon la revendication 2, dans lequel la fonction de perte multitâche inclut trois pertes définissant (1) une précision d'informations décodées, (2) une différence entre les informations décodées à partir de la sous-séquence de trames et les informations décodées à partir de la séquence complète de trames, et (3) une précision de prédiction du réseau neuronal de détecteur de synchronisation.

4. Système de traitement à faible latence d'IA (200) selon la revendication 1, dans lequel le processeur (220) déclenche l'exécution de modules du système de traitement à faible latence d'IA lors de la réception d'une nouvelle trame d'entrée annexée à la séquence de trames.

5. Procédé mis en œuvre par ordinateur (800) pour un système de traitement à faible latence d'intelligence artificielle, d'IA (200) comprenant un processeur (220) et une mémoire (240) stockant des instructions du procédé mis en œuvre par ordinateur en effectuant des étapes en utilisant le processeur (220), les étapes consistant à :

collecter (810) une séquence de trames d'un flux vidéo, la séquence de trames incluant conjointement des informations dispersées parmi au moins certaines trames dans la séquence de trames ;
exécuter (820) un réseau neuronal de synchronisation soumis à un apprentissage pour identifier une sous-séquence précoce de trames dans la séquence de trames incluant au moins une partie des informations indicatives des informations ; et
exécuter (830) un réseau neuronal de décodage soumis à un apprentissage pour décoder depuis les informations de la partie des informations dans la sous-séquence de trames,
dans lequel les informations sont une légende pour une scène audio, une scène vidéo ou une scène audio-vidéo ; et
dans lequel le réseau neuronal de synchronisation est formé conjointement avec le réseau neuronal de décodage pour identifier de manière itérative le plus petit nombre de sous-trames depuis le début d'une séquence d'apprentissage de trames contenant une partie d'informations d'apprentissage suffisante pour décoder les informations d'apprentissage ;
dans lequel le processeur (220) est configuré pour

exécuter un réseau neuronal d'extraction de caractéristiques pour extraire des caractéristiques à partir de chaque trame dans la séquence de trames, dans lequel le réseau neuronal d'extraction de caractéristiques extrait les caractéristiques depuis un signal audio $X^A$ et un signal visuel $X^V$ à partir de pistes audio et visuelles du flux vidéo ;
exécuter un réseau neuronal de codeur de caractéristiques pour coder les caractéristiques extraites de chaque trame afin de produire une séquence de caractéristiques codées ;
soumettre la séquence de caractéristiques codées au réseau neuronal de détecteur de synchronisation et identifier une sous-séquence de caractéristiques codées représentant la sous-séquence de trames ; et
soumettre la sous-séquence de caractéristiques codées au réseau neuronal de décodeur afin de décoder les informations ;

dans lequel des représentations codées pour des caractéristiques audio et visuelles sont obtenues en tant que $A^N$ et $V^N$ ;
dans lequel le réseau neuronal de synchronisation traite une séquence vectorielle codée à partir de chaque modalité avec des couches de convolution 1D empilées (414) sous la forme

$$A_C = \text{Conv1D}(A^N),\ V_C = \text{Conv1D}(V^N)\ ;$$

dans lequel le réseau neuronal de synchronisation résume chaque séquence à variation temporelle en un vecteur unique, le vecteur de résumé H, par des opérations de regroupement (415) et de concaténation (416) :

$$H = \text{Concat}(\text{MeanPool}(A_C),\ \text{MeanPool}(V_C))\ ;$$

dans lequel le réseau neuronal de synchronisation comprend une couche à action directe FFN (417) et une fonction sigmoïde $\sigma()$ (418) configurées convertissant le vecteur de résumé H en une probabilité de $\mathcal{D}$, où $\mathcal{D} \in \{0, 1\}$ est une variable aléatoire indiquant si une légende pertinente peut être générée ou non :

$$P(\mathcal{D} = 1 \mid X^A, X^V) = \sigma(\text{FFN}(H))$$

$$P(\mathcal{D} = 0 \,|\, X^A, X^V) = 1 - P(\mathcal{D} = 1 \,|\, X^A, X^V) \,;$$

dans lequel le réseau neuronal de décodage génère la légende sur la base des représentations codées pour des caractéristiques audio et visuelles $A^N$, $V^N$ une fois que le réseau neuronal de synchronisation fournit une probabilité supérieure à un seuil.

6. Procédé mis en œuvre par ordinateur (800) selon la revendication 5, dans lequel le réseau neuronal de détecteur de synchronisation est formé conjointement avec le réseau neuronal de décodeur sur des caractéristiques de différentes sous-séquences de la séquence de trames pour minimiser une fonction de perte multitâche incluant une perte de détection de temps et une perte de génération d'informations.

7. Procédé mis en œuvre par ordinateur (800) selon la revendication 6, dans lequel la fonction de perte multitâche inclut trois pertes définissant (1) une précision d'informations décodées, (2) une différence entre les informations décodées à partir de la sous-séquence de trames et les informations décodées à partir de la séquence complète de trames, et (3) une précision de prédiction du réseau neuronal de détecteur de synchronisation.

8. Procédé mis en œuvre par ordinateur (800) selon la revendication 5, dans lequel le processeur (220) déclenche l'exécution de modules du système de traitement à faible latence d'IA lors de la réception d'une nouvelle trame d'entrée annexée à la séquence de trames.

FIG.1  **100**

102 — Ground-truth caption: $Y = $ *"One of workers is hit by a bulldozer."*

101 —

Video stream
$X = x_{s:T}$

$s$ ...... $t$ ...... $T$

104 — $x_{s:t}$

110 —

Low latency captioning module

103 — | Timing Detector | Detected or not | Low-latency Caption Generator | — 105

106 — Caption by this invention: $\hat{Y} = $ *"One of workers is hit by a bulldozer."*

(Incorrect caption by prior art: $\hat{Y} = $ *"Workers are walking."*)

107 —

EP 4 392 901 B1

**FIG.2**

200

211 — Keyboard
212 — Pointing Device/Medium
Multimodal sensing data
290 — Network
295

210 — HMI
250 — NIC
220 — Processor
230 — Storage

300
301 — Low-latency caption generation training Module
303 — Training data set
320 — Future Frame Eliminator
309 — Pretrained caption generator
310 — Caption Generation Loss Calculator
311 — Caption similarity checker
— Timing Detection Loss Calculator

110 — Low-latency captioning module
103 — Low latency caption generator
105 — Timing Detector Module

201 — Interaction Module
202 — Caption understanding Module
203 — Response Generator

302 — Feature Extractor

260 — Display/speaker Interface
261 — Display/speaker Device
262 — Machine Interface
263 — Machine Actuator

271 — Multimodal sensor interface
272 — Input device: Multimodal sensor
273 — Audio Interface
274 — Input device: Microphone Device
275 — Visual Interface
276 — Input device: Camera Device

240 — Memory
280 — Printer Interface
285 — Printing Device

EP 4 392 901 B1

FIG.3

**300**

EP 4 392 901 B1

FIG.4   400

Detection Probability — 401
Distribution

Posterior Probability Distribution — 420
of Next Word

Decoder — 403

Timing-detection Module — 404

418 — Sigmoid — 418

417 — Feed-Forward — 417

416 — CONCAT — 416

415 — Pooling | Pooling — 415

414 — CONV1D | CONV1D — 414

Softmax — 424

Linear — 423

xM

422 — Feed-Forward — 428

CONCAT — 427

Bi-modal Attention | Bi-modal Attention — 426

426 —

Encoder — 402

413 — xN
412 — Feed Forward | Feed Forward — 412

411 — Bi-modal Attention | Bi-modal Attention — 411

410 — Self-Attention | Self-Attention — 410

Self-Attention — 425

Word Embedding — 421

401 —
406 — VGGish | I3D — 407

408 — Audio Signal   Visual Signal — 409

Previous Words — 419

405 — Video Stream

EP 4 392 901 B1

FIG.5

| Method | Latency ratio | METEOR |
|---|---|---|
| Baseline | 100% | 10.67 |
| Naïve method | 55% | 10.20 |
| This invention | 56% | **10.38** |
| This invention w/ ST | 55% | **10.45** |
| Naïve method | 33% | 9.59 |
| This invention | 29% | **9.93** |
| This invention w/ ST | 28% | **10.00** |

**FIG.6**  **600**

EP 4 392 901 B1

FIG.7

FIG.8

**800**

810

collect a sequence of frames jointly including information dispersed among at least some frames in the sequence of frames

811

collect a sequence of frames jointly including information

820

execute a timing neural network trained to identify an early subsequence of frames in including at least a portion of the information indicative of the information

821

early subsequence of frames

830

execute a decoding neural network trained to decode the information from the portion of the information

840

**information**

FIG.9

(A) Low-latency Video QA    (B) Baseline

# FIG.10

Answer quality of baseline and proposed systems on AVSD task

| Latency | Method | AVSD-DSTC7 | | AVSD-DSTC8 | |
|---|---|---|---|---|---|
| | | BLEU4 | METEOR | BLEU4 | METEOR |
| 1.0 | Baseline | 0.394 | 0.252 | 0.372 | 0.237 |
| | Proposed | **0.396** | **0.253** | **0.381** | **0.243** |
| 0.5 | Baseline | 0.387 | 0.238 | 0.362 | 0.226 |
| | Proposed | **0.396** | **0.254** | **0.379** | **0.243** |
| 0.2 | Baseline | 0.362 | 0.221 | 0.345 | 0.212 |
| | Proposed | **0.390** | **0.250** | **0.374** | **0.239** |

EP 4 392 901 B1

## FIG.11A

(a) F=0.3 (avg. latency: 0.209)

(b) F=0.4 (avg. latency: 0.496)

EP 4 392 901 B1

## REFERENCES CITED IN THE DESCRIPTION

**Patent documents cited in the description**

- US 2022014807 A1

- US 10417498 B

**Non-patent literature cited in the description**

- **PARAG ANKIT et al.** *DSTC10-AVSD Submission System with Reasoning using Audio-Visual Transformers with Joint Student-Teacher Learning*, 01 March 2022, https://github.com/shanemoon/dstc10-blob/main/papers/dstc10_aaai22_track4 _34.pdf

- Dense Video Captioning using BiLSTM Encoder. **MADAKE JYOTI et al.** 2022 3RD INTERNATIONAL CONFERENCE FOR EMERGING TECHNOLOGY (INCET). IEEE, 27 May 2022, 1-6